**Europäisches Patentamt**

**European Patent Office**

**Office européen des brevets**

(19)

(11) Veröffentlichungsnummer : **0 333 772 B1**

(12) # EUROPÄISCHE PATENTSCHRIFT

(45) Veröffentlichungstag der Patentschrift :
**29.07.92 Patentblatt 92/31**

(51) Int. Cl.$^5$ : **E04B 1/58, E04H 1/12**

(21) Anmeldenummer : **88900874.4**

(22) Anmeldetag : **28.10.87**

(86) Internationale Anmeldenummer :
**PCT/EP87/00644**

(87) Internationale Veröffentlichungsnummer :
**WO 88/03203 05.05.88 Gazette 88/10**

(54) **BAUELEMENT-SYSTEM.**

(30) Priorität : **28.10.86 DE 3636639**

(43) Veröffentlichungstag der Anmeldung :
**27.09.89 Patentblatt 89/39**

(45) Bekanntmachung des Hinweises auf die
Patenterteilung :
**29.07.92 Patentblatt 92/31**

(84) Benannte Vertragsstaaten :
**AT BE CH DE FR GB IT LI LU NL**

(56) Entgegenhaltungen :
**EP-A- 0 022 070**
**EP-A- 0 144 030**

(73) Patentinhaber : **ABR-Bausystem AG**
**Granitweg 6**
**CH-8006 Zürich (CH)**
Patentinhaber : **AURICH, Reinhard**
**Etzelstrasse 11**
**CH-5430 Wettingen (CH)**

(72) Erfinder : **AURICH, Reinhard**
**Etzelstrasse 11**
**CH-5430 Wettingen (CH)**
Erfinder : **BECK, Josef**
**Saumackerstrasse 8**
**CH-8048 Zürich (CH)**

(74) Vertreter : **Breiter, Heinz**
**Patentanwalt H. Breiter AG**
**Schaffhauserstrasse 27 Postfach 1163**
**CH-8401 Winterthur (CH)**

## Beschreibung

Die Erfindung bezieht sich auf ein Bauelement-System für Skelettrahmenkonstruktionen unter Verwendung von säulenartigen Stützrohren mit achsparallel an deren Außenumfang sich erstreckenden, rinnenähnlichen Vertiefungen, und von in diese Vertiefungen nach Art einer Verzahnung formschlüssig eingreifenden Gegenprofilen an den Innenflächen von lösbar mit den Stützrohren verbindbaren Anschluß-Elementen, wobei der am Außenumfang der Stützrohre verzahnungsartig eingreifende Sektor der Anlageprofile der Anschluß-Elemente einen Umgriffwinkel zwischen 60° und 120° aufweist (EP-A-0022070).

Ausgehend von diesem bekannten System hat sich der Erfinder die Aufgabe gestellt, dessen Anwendungsmöglichkeiten und damit dessen Brauchbarkeit zu erweitern und zu verbessern, in dem es durch Kombination mit unterschiedlich ausgestalteten Anschluß-Elementen für die Herstellung beliebiger und allen vorkommenden Erfordernissen entsprechenden Konstruktions-Konzepten bei kleineren Hochbauten, beispielsweise einfacher Überdachungen, Wartehäuschen bis zu kleineren ein- und zweigeschossigen Hallenbauten angewendet werden kann.

Zur Lösung dieser Aufgabe führt, daß der am Außenumfang der Stützrohre verzahnungsartig eingreifende Sektor der Anlageprofile der Anschluß-Elemente einen Umgriffwinkel zwischen 60° und 120° aufweist, und daß die Anschluß-Elemente mit wenigstens einem weiteren verzahnungsartigen Anlageprofil zum lösbaren, formschlüssigen Verbinden mit wenigstens einem weiteren Stützrohr versehen sind, welches zum erstgenannten Stützrohr in einem Winkel steht.

Nach weiteren wesentlichen Merkmalen der Erfindung verlaufen die Achsen von je zwei mittels eines Anschluß-Elements lösbar formschlüssig verbundenen Stützrohren in einer Ebene und schneiden sich, oder aber die Achsen von je zwei mittels eines Anschluß-Elements lösbar formschlüssig verbundenen Stützrohren verlaufen in zwei parallel zueinander stehenden Ebenen und kreuzen sich. Die Ausbildung kann auch so getroffen sein, daß die Achsen von je zwei mittels eines Anschluß-Elements lösbar formschlüssig verbundenen Stützrohren in zwei in einem Winkel zueinander stehenden Ebenen verlaufen und sich schneiden.

Nach einem wesentlichen Merkmal der Erfindung ist ein Anschluß-Element als Winkeleinsatz ausgebildet und mit einem unter leichtem Preßsitz in ein erstes Stützrohr bis zum zylindrischen Bund einfügbares Einsatzstück sowie mit einer in einer schneidenden Querachse verlaufende Aufnahmemulde mit einem verzahnungsartigen Anlageprofil zum formschlüssigen Eingriff mit einem zweiten Stützrohr versehen.

Dabei ist vorgesehen, daß die Aufnahmemulde mit wwenigstens zwei beidseitig angebrachten, zur Achse des anzuschließenden zweiten Stützrohres gerichteten, zum Durchstecken vor Spannschrauben dienenden Bohrungen versehen ist, die in Schrägeinstichen münden.

Mit Hilfe dieses Winkelansatzes können zwei Stützrohre sich in ihren Achsen schneidend miteinander starr verbunden werden. Vorzugsweise ist der Winkelansatz so ausgebildet, daß die Achse der Aufnahmemulde zum Ansatzstück in einem rechten Winkel steht. Es sind jedoch auch schiefwinklige Ausbildungen möglich.

In einer Abwandlung des Winkelansatzes kann die Aufnahmemulde als beidseitig über das Einsatzstück hinausreichende Tragbettung ausgebildet sein. Auch hier sind die gleichen recht- oder schiefwinkligen Gestaltungen möglich.

Eine andere Ausgestaltung eines Anschluß-Elementes besteht darin, daß es als Kreuz-Tragstück ausgebildet und mit zwei in einem Winkel von 90° zueinander angeordneten Aufnahmemulden für zwei Stützrohre versehen ist, die sich in geringem Abstand kreuzend in zwei parallelen Ebenen verlaufen. Dabei können der Anschlußflansch und die Anschlußmulde für die Stützrohre, die mit dem verzahnungsartigen Anlageprofil versehen sind, durch wenigstens eine Versteifungsrippe verbunden sein, um die Tragkraft der Verbindung zu verbessern. Auch bei dieserr Ausgestaltung kann die Anschlußmulde eine größere Länge als der Anschlußflansch aufweisen. Zum Verbinden mittels Spannschrauben ist dabei jede der beiden Aufnahmemulden des Anschlußflansches und der Anschlußmulde mit jeweils mindestens zwei zur Achse des jeweils anzuschließenden Stützrohres hin gerichteten Bohrungen zum Durchstecken der Spannschrauben versehen.

Eine weitere erfindungsgemäße Ausgestaltung eines Anschluß-Elementes besteht darin, daß es als stumpfer Winkelansatz ausgebildet und mit zwei im rechten Winkel zueinander stehenden, sich in einer Ebene erstreckenden Anschlußstücken mit Aufnahmemulden für jeweils zwei Stützrohre versehen ist. Vorteilhaft ist es, wenn die Anschlußstücke mittels wenigstens einer Formrippe gegeneinander abgestützt sind. Auch hier ist vorgesehen, daß jedes Anschlußstück mit jeweils mindestens zwei zur Achse des anzuschließenden Stützrohres hin gerichteten Bohrungen zum Durchstecken von Spannschrauben versehen sind. Auch bei dieser Ausgestaltung können die beiden Anschlußstücke auch in einem anderen als einem rechten Winkel zueinander angeordnet sein.

Diese Anschluß-Elemente mit den vorgenannten Merkmalen sind in der Weise ausgestaltet, daß sie in einem Umgriffwinkel-Sektor zwischen 60° und 120° von außen an das tragende Stützrohr angeschlossen und mit diesem fest verbunden werden. Die bevorzugte Verbindungsweise besteht darin, daß durch die vorgesehenen Bohrungen Spannschrauben gesteckt und dadurch die Anschluß-Elemente mit dem jeweiligen Stützrohr die Gewindegänge eingeschniten werden, oder aber es können auch selbstschneidende Schrauben verwendet werden.

Weitere Befestigungsmöglichkeiten bestehen durch Vernieten oder Verkleben.

In Abwandlung dieser Anschluß- und Befestigungsweise ist eine weitere Anzahl von Anschluß-Elementen so ausgestaltet, daß sie das jeweils tragende Stützrohr vollständig umgreifend festklemmbar sind, so daß durch den Formschluß der verzahnungsartigen Aufnahmemulden ein Verdrehen nicht möglich ist.

Ein bevorzugtes Anschluß-Element dieser Art ist als Kreuz-Flanschstück ausgebildet und mit einer Umfassungsmulde mit einem verzahnungsartigen Anlageprofil für ein Stützrohr sowie mit zwei an die das Anlageprofil enthaltende Flanschmuffe anschließenden Seitenflanschen mit Schraubbohrungen versehen, an die sich beidseitig abgewinkelt je ein Profil-Druckstück mit einem weiteren Anlageprofil anschließt, welches im Zusammenwirken mit einem zweiten um 90° geschwenkten ein zweites Stützrohr aufnehmenden Kreuz-Flanschstückes in verschraubten Zustand in dessen Aufnahmemulde preßt.

Dieses Kreuz-Flanschstück ist jedoch nicht nur zum Verbinden zwei sich kreuzender Stützrohre geeignet, sondern es kann auch in Komination mit anderen Anschluß-Elementen verwendet werden. Dies gilt auch für eine weitere bevorzugte Ausgestaltung eines Anschluß-Elementes als Kreuz-Verbindungsstück, welches mit einer Umfassungsmulde mit einem verzahnungsartigen Anlageprofil für ein Stützrohr sowie mit beidseitig angebrachten Einstichen mit rechtwinklig zu den Flanschflächen verlaufenden und in diese mündenden Schraubenbohrungen versehen ist und bei dem die beidseitigen Flanschflächen mit zwei zwischen den Schraubbohrungen angeordneten, hervorstehenden Profil-Druckstücken mit Anlageprofilen versehen sind, welche im Zusammenwirken mit einem zweiten um 90° geschwenkten, ein zweites Stützrohr aufnehmenden Kreuz-Verbindungsstück in verschraubtem Zustand in dessen Aufnahmemulde preßt. Diese letztere Ausbildungsweise ist bevorzugt vorgesehen, wenn das Anschluß-Element aus einem Guß-Werkstoff hergestellt werden soll.

In abgewandelter Ausgestaltung kann ein Anschluß-Element als Klemmstück ausgebildet und mit einer Aufnahmemulde mit verzahnungsartigem Anlageprofil für ein Stützrohr sowie beiderseits mit Ausbuchtungen für Schraubbohrungen versehen sein. Dieses Klemmstück ist als eine Art Rohrschelle in Kombination mit zahlreichen anderen Anschluß-Elementen verwendbar, beispielsweise mit einem Winkelklemmstück, welches aus zwei einstückig ineinander übergehenden, einen rechten (oder auch schiefen Winkel) zueinander bildenden Quaderteilen besteht, von denen jeder eine Aufnahmemulde aufweist, deren Achsen einander schneiden, wobei eine der Aufnahmemulden stumpf auf den Quaderteil der anderen Aufnahmemulde stößt und daß beidseitig jeder Aufnahmemulde paarweise Ausbuchtungen für Schraubbohrungen angebracht sind. Dieses Anschluß-Element ist dazu vorgesehen, zwei in zwei Ebenen sich kreuzende Stützrohre mit Hilfe von zwei Klemmstücken miteinander zu verbinden.

In Abwandlung hiervon kann dieses Anschluß-Element auch als Kreuzklemmstück ausgebildet sein und eine etwa quaderförmige Gestalt aufweisen, die auf zwei einander gegenüberliegenden Seiten mit je einer Aufnahmemulde für ein Stützrohr versehen ist, deren Achsen in zwei in einem Abstand voneinander parallel verlaufenden Ebenen liegen und einen Winkel zueinander bilden. Dabei ist ebenfalls vorgesehen, daß beidseitig jeder Aufnahmemulde paarweise Ausbuchtungen für Schraubbohrungen angebracht sind. Zur Komplettierung dieses Anschluß-Elementes dienen zwei Klemmstücke, mittels welchen jeweils ein Stützrohr sich kreuzend in zwei parallelen Ebenem eingespannt werden kann.

Ähnliche Merkmale weist ein davon etwas abgewandeltes Winkelabsatz-Klemmstück auf, welches aus zwei einstückig ineinander übergehenden, einen rechten Winkel zueinander bildenden Quaderteilen besteht, von denen jeder eine Aufnahme-mulde aufweist, deren Achsen sich schneiden, wobei die freien Stirnflächen der beiden Aufnahmemulden aufeinander stoßend sich in einer Geraden schneiden, die quer zu Achsebene der Aufnahmemulden verläuft. Auch hier sind Ausbuchtungen bzw. Vertiefungen für Schraubbohrungen angebracht, die dazu dienen, die Stützrohre mit Hilfe von zwei Klemmstücken in der gewählten Position zu befestigen.

Eine weiter Ausgestaltung eines Anschluß-Elementes wird in Form eines Winkelschenkel-Klemmstückes vorgeschlagen, welches aus zwei einstückig miteinander verbundenen, einen Winkel zueinander bildenden Schenkelteilen geformt ist, von denen jedes eine Aufnahmemulde aufweist, deren Achsen sich schneiden, wobei die Schenkelteile gegeneinander durch mindestens eine Formrippe versteift sind und beidseitig jeder Aufnahmemulde paarweise Ausbuchtungen für Schraubbohrungen angeformt sind. Das so gestaltete Anschluß-Element ist ebenso wie das bereits behandelte Winkelklemmstück oder aber das Winkelabsatz-Klemmstück zur Herstellung von ebenen wie auch räumlichen Skelett-Konstruktionen bzw. Fachwerk-Konstruktionen geeignet. Für ebene oder auch räumliche Fachwerke können diese Winkel-Anschlußelemente auch mit 30° bzw. 45° Anschlußwinkeln versehen sein.

Eine weitere Gestaltungsmöglichkeit eines Anschluß-Elementes besteht aus einem langen Kreuzflanschstück, welches als quaderähnliches Werkstück geformt ist und zwei mit ihren Achsen in einer Ebene liegende Aufnahmemulden aufweist, die in einem rechten (oder schiefen) Winkel zueinander stehen und die ferner mit den Aufnahmemmulden zugeordneten Schraubbohrungen versehen ist. Auch dieses Element kann bei bestimmten Konstruktionsaufgaben vorteilhaft eingesetzt werden.

Ferner wird ein Anschluß-Element als Flanschklemmstück vorgeschlagen, welches mit einer Aufnahmemulde versehen ist, deren Achse in einem rechten (oder schiefen) Winkel zu seiner ebenen Flanschfläche steht, mittels welcher es an eine ebene Gegenfläche mittels Verschraubungen durch Schraubbohrungen anschließbar ist. Mit diesem Flanschklemmstück ist es beispielsweise möglich, eine Skelett-Konstruktion an ein vorhandenes Bauwerk anzuschließen.

Besonders vorteilhaft kann ein weiteres Anschluß-Element eingesetzt werden, welches als Dreifach-Kreuzklemmstück ausgebildet und mit drei Aufnahmemulden versehen ist, von denen zwei sich schneidend in einer Ebene liegen und die eine als Sack-Aufnahmemulde stumpf zur anderen hin verläuft, während die dritte Aufnahmemulde die Achsen der beiden anderen Aufnahmemulden in einer Ebene parallel zu der Ebene der beiden anderen Aufnahmemulden kreuzend verläuft, und wobei alle drei Aufnahmemulden mit paarweise angeordneten Schraubbohrungen versehen sind. Mit Hilfe dieses Anschluß-Elementes ist es möglich, einen rechtwinkligen (oder auch schiefwinkligen) Knoten herzustellen, weil die drei an die Aufnahmemulden angeschlossenen Stützrohre in dreidimensional verlaufenden Achsen liegen.

Weiterhin kann es vorteilhaft sein, wenn ein Anschluß-Element als Klemmstück mit Anschlußplatte ausgebildet und mit einer Aufnahmemulde versehen ist, deren Achse parallel zur Befestigungsebene ihrer Anschlußplatte verläuft, und wobei die Aufnahmemulde und die Anschlußplatte mit Schraubbohrungen versehen sind. Dieses Anschluß-Element ermöglicht es beispielsweise, an vertikal oder horizontal verlaufende Stützrohre ebene Flächenelemente oder aber abstandsverteilt Befestigungsstreben für derartige Flächenelemente anzubringen. Es kann aber auch dazu dienen, ein Stützrohr an eine bestehende Baukonstruktion anzuschließen.

Für ähnliche Aufgaben ist ein als Fußklemmstück ausgebildetes Anschluß-Element vorgesehen, welches mit einer Sack-Aufnahmemulde versehen ist, die senkrecht (oder in einem schiefen Winkel) zu seiner ebenen Fußplatte hingerichtet ist, und bei der die Aufnahmemulde und die Fußplatte mit Schraubbohrungen versehen sind.

Ebenfalls zur Bildung von ebenen oder räumlichen Skelett-Konstruktionen kann ein Anschluß-Element herangezogen werden, welches als Steck-Klemmstück ausgebildet und mit einer Aufnahmemulde versehen ist, deren Achse rechtwinklig (oder schiefwinklig) zu seinem Einsatzstück zum Einstecken in ein Stützrohr verläuft und welches mit zwei gegenüberliegenden Ausbuchtungen mit Schraublöchern versehen ist. Dieses Element eignet sich zum Aufstecken auf beispielsweise senkrecht stehende Stützrohre, an welchen ein waagerechtes Stützrohr angeschlossen werden soll.

Für die Herstellung ebener oder räumlicher Fachwerke ist ein weiteres Anschluß-Element vorteilhaft, welches als Laschenklemmstück ausgebildet und mit einer Sack-Aufnahmemulde versehen ist, deren Achse zur laschenartigen Verlängerung hinweist, die mit einer Bohrung 143 zum Anschluß an einen Festpunkt oder einen Zug/Druckstab ausgerüstet ist.

In Abwandlung des Laschenklemmenstückes besteht eine weitere Ausgestaltung eines Anschluß-Elementes in einem Laschen-Querklemmstück mit einer quer zur laschenartigen Verlängerung gerichteten Aufnahmemulde und zugehörigen Schraubbohrungen in der Weise, daß die laschenartige Verlängerung mit einer Bohrung zum Anschluß an einen Festpunkt oder einen Zug/Druckstab ausgerüst ist.

Das erwähnte Laschenklemmstück und auch das eben beschriebene Laschen-Querklemmstück können zum Festklemmen an einem Stützrohr sowohl mit normalen Klemmstücken als auch jeweils mit einem gleichartigen Laschenklemmstück oder einem Laschen-Querklemmstück zusammenwirken.

Ein weiteres wichtiges Anschluß-Element ist als Winkelverstell-Klemmstück ausgebildet, welches aus zwei zusammenwirkenden Klemmstücken besteht, deren einander zugewandte Rückseiten mit ineinander eingreifenden konzentrischen Verzahnungen ausgerüstet sind, und die mittels einer die zentrischen Bohrungen durchsetzenden Verschraubungen gegeneinander verspannbar sind. Mit Hilfe dieses Anbau-Elementes ist es möglich, zwei in parallelen Ebenen angeordnete Stützrohre um einen Winkel gegeneinander verschwenkt einzuspannen, wobei der Verschwenkwinkel der Kreisteilung der konzentrischen Verzahnung entspricht.

Schließlich ist ein weiteres Anschluß-Element als Muffenklemmstück ausgebildet und als länglicher Quader geformt, der beidendig mit je einer gleichachsig ausgerichteten Sack-Aufnahmemulde versehen ist und mindestens zwei zwischen den letzteren angebrachten Schraubbohrungen aufweist, wobei zum Anschließen der Stützrohre entweder zwei Muffenklemmstücke oder zwei einfache Klemmstücke zusammen mit dem Muffenklemmstück dienen. Auch hier ist die Befestigung von zwei gleichachsigen Stützrohren auf einer ebenen Fläche oder einem sonstigen Bauteil möglich.

Das Bauelement-System nach der Erfindung, bestehend aus den Stützrohren mit den an den verzahnten Außenumfang der Stützrohre eingreifenden Anlageprofilen der Aufnahmemulden der einzelnen Anschluß-Elemente ermöglicht eine nahezu unbegrenzte Zahl von Kombinationen zur Herstellung von Skelettrahmenbauten.

Weitere Merkmale der Erfindung und deren Ausbildungs- und Anwendungsmöglichkeiten sowie ihre Vorteile gehen aus der Zeichnung und der nachfolgenden Beschreibung hervor.

Es zeigen

Fig. 1 Die Anwendung des Stützrohres mit einem Anschlußprofil und Anbauteilen bei einem Kleinbau;

Fig. 2 einen Winkel-Ansatz in perspektivischer Darstellung;

Fig. 3 den Winkel-Ansatz gem. Fig. 2 in Vorderansicht mit einem Teilschnitt;

Fig. 4 den Winkel-Ansatz gem. Fig. 2 und 3 in Seitenansicht;

Fig. 5 Anwendung des Winkel-Ansatzes gem. Fig. 2 bis 4 zur Verbindung von zwei Stützrohren;

Fig. 6 die Darstellung gem. Fig. 5 in Stirnansicht;

Fig. 7 Anwendung des Winkel-Ansatzes gem. Fig. 2 bis 4 zur Halterung eines geneigten Stützrohres mit Abdeckung durch Klarsichtscheiben;

Fig. 8 einen Winkel-Tragansatz in perspektivischer Darstellung;

Fig. 9 den Winkel-Tragansatz gem. Fig. 8 in Seitenansicht;

Fig. 10 den Winkel-Tragansatz gem. Fig. 8 und 9 in Vorderansicht mit einem Teilschnitt;

Fig. 11 Anwendung des Winkel-Tragansatzes gem. Fig. 8 bis 10 zur Verbindung von zwei Stützrohren;

Fig. 12 Anwendung des Winkel-Tragansatzes gem. Fig. 8 bis 10 zur Halterung eines geneigten Stützrohres;

Fig. 13 Anwendung des Winkel-Tragansatzes gem. Fig. 8 bis 10 zur Halterung eines waagerechten Stützrohres (s. Fig. 11) in Verbindung mit einem Rinnenprofil und daran befestigt gebogene Acrylglasscheiben (Tonnengewölbe);

Fig. 14 Anwendung des Winkel-Tragansatzes gem. Fig. 8 bis 10 zur Halterung eines waagrechten Stützrohres (s. Fig. 11) in Verbindung mit zwei Wand- bzw. Dachflächen (transparente Doppelstegplatten);

Fig. 15 ein Kreuz-Tragstück in perspektivischer Darstellung;

Fig. 16 das Kreuz-Tragstück gem. Fig. 15 in Stirnansicht;

Fig. 17 das Kreuz-Tragstück gem. Fig. 15 in Vorderansicht;

Fig. 18 das Kreuz-Tragstück gem. Fig. 15 in Draufsicht;

Fig. 19 eine Anwendung von zwei Kreuz-Tragstücken zur sich kreuzenden Verbindung zwischen zwei Stützrohren;

Fig. 20 Anwendung eines Kreuz-Tragstückes und eines Winkel-Tragansatzes zur Halterung eines waagrechten Stützrohres auf senkrechten Stützrohren sowie einer schiefwinklig kreuzenden Verankerung von Stützrohren als Pfetten;

Fig. 21 einen stumpfen Winkelansatz in perspektivischer Darstellung;

Fig. 22 den Winkelansatz gem. Fig. 21 in Stirnansicht;

Fig. 23 den Winkelansatz gem. Fig. 21 in Seitenansicht;

Fig. 24 einen Schnitt A-A' gem. Fig. 23;

Fig. 25 Anwendung eines stumpfen Winkelansatzes gem. Fig. 21 bis 24 als Eckaussteifung sowie eines Winkel-Ansatzes gem. Fig. 2 bis 4 als Auflager zur Verbindung von zwei Stützrohren;

Fig. 26 zwei zusammenwirkende Kreuz-Flanschstücke;

Fig. 26a Fig. 26b die Kreuz-Flanschstücke gem. Fig. 26 in Einzeldarstellungen;

Fig. 27 ein Querschnitt durch ein Kreuz-Flanschstück gem. Fig. 26 bzw. 26a/26b;

Fig. 28a Fig. 28b zwei zusammenwirkende Kreuz-Verbindungsstücke in perspektivischer Darstellung;

Fig. 29 ein Klemmstück in perspektivischer Darstellung;

Fig. 30 ein Kreuzklemmstück (90° kreuzend) in perspektivischer Darstellung;

Fig. 31 ein Winkelklemmstück (90° schneidend) in perspektivischer Darstellung;

Fig. 32 ein Winkelabsatz-Klemmstück (90° flächeneben) in perspektivischer Darstellung;

Fig. 33 ein Winkelschenkel-Klemmstück (90° flächeneben) in perspektivischer Darstellung;

Fig. 34 ein Flanschklemmstück (flächenwinklig) in perspektivischer Darstellung;

Fig. 35 ein Kreuzflanschstück (90° schneidend) in perspektivischer Darstellung;

Fig. 36 ein Dreifach-Kreuzklemmstück in perspektivischer Darstellung;

Fig. 37 ein Klemmstück mit Anschlußplatte (flächenparallel) in perspektivischer Darstellung;

Fig. 38 ein Fußklemmstück (flächenwinklig) in perspektivischer Darstellung;

Fig. 39 ein Laschenklemmstück (flächeneben) in perspektivischer Darstellung;

Fig. 40 ein Laschen-Querklemmstück (flächenparallel) in perspektivischer Darstellung;

Fig. 41 ein Steck-Klemmstück (90° schneidend) in perspektivischer Darstellung;

Fig. 42a Fig. 42b ein Winkelverstell-Klemmstück, bestehend aus zwei zusammenwirkenden Klemmstük-

ken (achsparallel verstellbar) in perspektivischer Darstellung;

Fig. 43 ein Muffenklemmstück (achsverlaufend) in perspektivischer Darstellung.

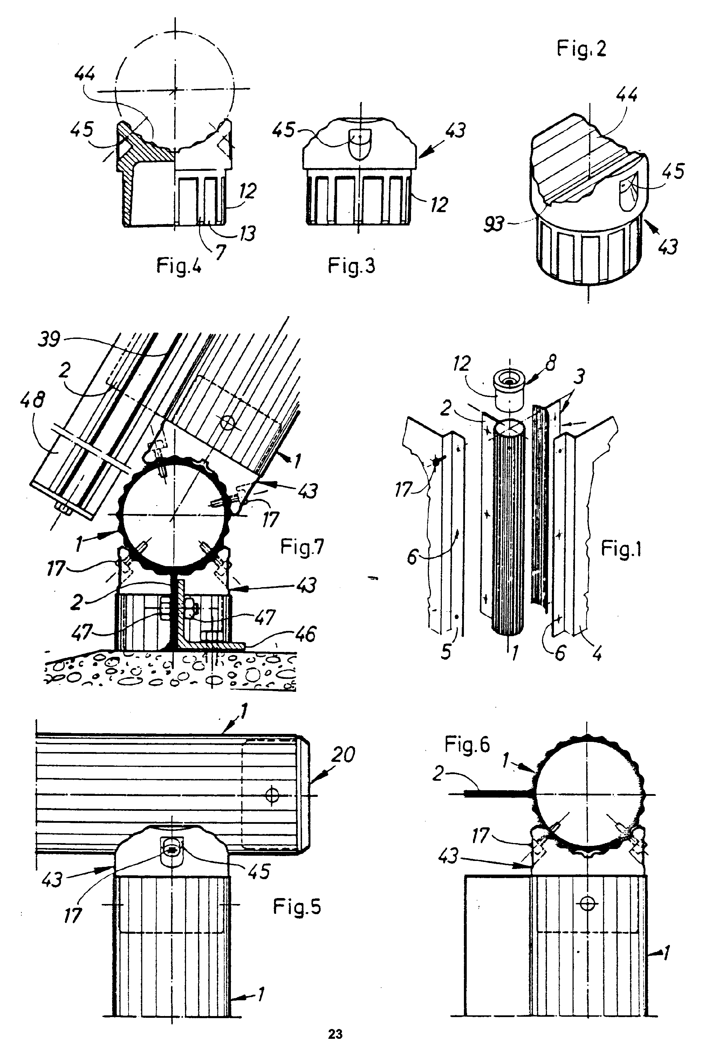

In Fig. 1 ist ein bekanntes Stützrohr-System dargestellt. Das bekannte säulenartige Stützrohr ist mit achsparallel an seinem Außenumfang sich erstreckenden, rinnenähnlichen Vertiefungen in enger Winkelteilung versehen. In diese Vertiefungen greifen nach Art einer Verzahnung formschlüssig die Gegenprofile an den Innenflächen von lösbar mit dem Stützrohr verbindbaren Anschluß-Elementen 3 ein. Das Stützrohr 1 selbst ist in seiner dargestellten und bevorzugten Ausbildung mit einem fest verbundenen, radial nach außen weisenden Steg 2 versehen. Ferner ist in Fig. 1 ein Anschlußprofil mit Steg 3 dargestellt, an welchem Anschluß-Wandteile 4 und 5 angeschraubt werden können. Für diesen Zweck sind der Steg 2 des Stützrohres und auch der Steg des Anschlußprofiles 3 ebenfalls mit Schraubbohrungen versehen. Das Stützrohr kann nach oben durch ein flaches Abschlußstück 20 abgeschlossen werden.

Die Fig. 2 bis 4 zeigen einen Winkel-Ansatz 43, der mit einem zylindrischen Einsatz-Stück 12 zum Einstecken in ein Stützrohr 1 (siehe Fig. 5 - 7) versehen ist. Das Einsatz-Stück 12 ist so bemessen, daß es sich unter leichtem Preßsitz in das Stützrohr 1 einfügen läßt. Die Durchmesservertiefungen 13 sollen es ermöglichen, bei einem zu strammen Sitz die möglicherweise zu hohe Preßkraft dadurch zu begrenzen, daß die Möglichkeit zur Verformung und zum Ausweichen des Materials der Führungsrippen 7 in diese Vertiefungen besteht.

Mit 44 ist eine Aufnahmemulde bezeichnet, die ein verzahnungsartiges Anlageprofil zum formschlüssigen Eingriff mit einem zweiten Stützrohr versehen ist. die Achse der Aufnahmemulde 44 verläuft quer zur Achse des Einsatz-Stückes 12 und schneidet diese. Sowohl das Einsatz-Stück im Stützrohr wie auch das in der Aufnahmemulde 44 aufgenommene Stützrohr 1 sind mittels Spannschrauben 17 (siehe Fig. 5 - 7) mit dem Winkel-Ansatz 43 verschraubt. Um einen einwandfreien Sitz der Schraubenköpfe im Winkel-Ansatz 43 zu gewährleisten, sind die Schraubbohrungen in vertieften Schrägeinstichen 45 angeordnet.

In den Fig. 5 bis 7 sind Anwendungsfälle für den Winkel-Ansatz 43 dargestellt. Die einfachste Ausbildungsweise besteht gemäß Fig. 5 darin, daß in Querrichtung zum vertikal stehenden Stützrohr mittels des Winkel-Ansatzes 43 ein horizontal verlaufendes Stützrohr mit dem ersteren verbunden ist

Diese Konstruktion ist in Fig. 6 um 90° gedreht dargestellt.

Ein weitere Anwendungsfall zeigt Fig. 7. Dort ist mittels des Winkelprofils 46 der Steg 2 des waagerecht liegenden Stützrohres 1 durch Verschraubung mit einem Fundament B verbunden. Am waagerecht liegenden Stützrohr 1 sind mittels der Winkel-Ansätze 43 ein nach unten weisendes Stützrohr 1a sowie unter einem Winkel von 30° ein schräg nach oben weisendes Stützrohr 1 angeschlossen. Letzteres Stützrohr dient zur Befestigung der Halterung 48 für eine Klarsichtscheibe 39.

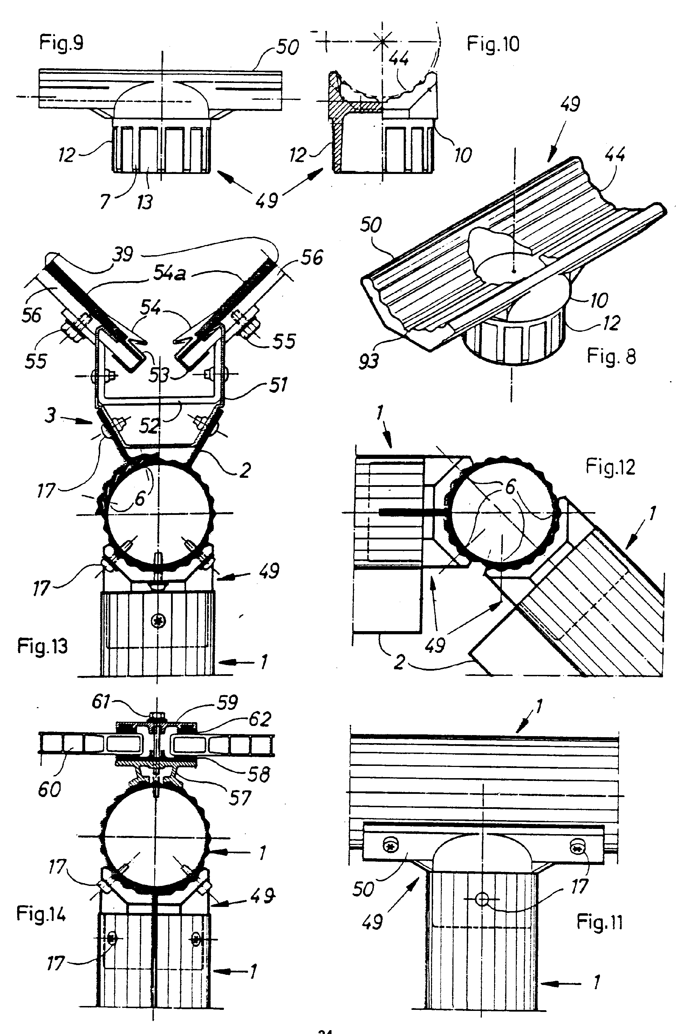

Die Fig. 8 bis 14 zeigen eine hiervon abgewandelte Ausführung, als Winkel-Tragansatz bezeichnet. Wie aus den Fig. 8 bis 10 ersichtlich, ist an einem Einsatz-Stück 12 zum Einfügen in ein Stützrohr mittels des Winkelansatzes 43 die Tragbettung 50 mit der Aufnahmemulde 44 für ein rechtwinklig zur Achse des senkrechten Stützrohres anzuschließendes waagerechtes Stützrohr verbunden. Diese konstruktion ist in Fig. 11 dargestellt. Die Fig. 9 und 10 lassen die Einzelheiten dieses Winkel-Tragansatzes 49 näher erkennen. Auch hier sind Schraubbohrungen zum Durchstecken von Spannschrauben 17 vorgesehen, die der Befestigung des Stützrohres in der Aufnahmemulde 44 dienen. Ferner ist auch das Einsatz-Stück 12 mittels der Verschraubung 17 im Stützrohr befestigt.

Wie aus Fig. 12 hervorgeht, kann ein waagerechtes Stützrohr 1 mittels des Winkel-Tragansatzes 49 horizontal gelagert sein, und in einem Winkel von 60° ist ein weiteres Stützrohr mittels eines weiteren Winkel-Tragansatzes 49 angeschlossen.

Wie aus der bereits erwähnten Fig. 11 ersichtlich ist, können auch zwei mit ihren Endlängen stumpf aufeinander stoßende Stützrohre mit der Tragbettung 50 verbunden werden.

In Fig. 13 ist ein Anwendungsbeispiel dargestellt, bei welchem zur Lagerung eines waagerechten Stützrohr-Rahmens Winkel-Tragansätze 49 Verwendung finden. Mittels des am Tragrohr befestigten Außensteges 2 und eines Anschlußprofiles mit Steg 3 sind hier ein Rinnenprofil 51, ein Montagebügel 52 und zwei Auflagebügel 56 für Klarsichtscheiben 39 befestigt. Das Verglasungsspannelement 54 welches mit den Enden in das Glashalterungsprofil 53 eingreift dient der Verspannung der Klarsichtscheiben 39 auf dem Auflagebügel 56. Die dazwischengelegte Gummiplatte 54a verringert den Reibungsdruck.

Fig. 14 zeigt wie in ähnlicher Weise an einem horizontalen Stützrohr mittels des Flach-Auflageprofils 57, des Dichtungsprofils 58 und dem Klemmprofil 59 die Dach- oder Wandelemente 60 unter der Wirkung der Verschraubung befestigt werden können.

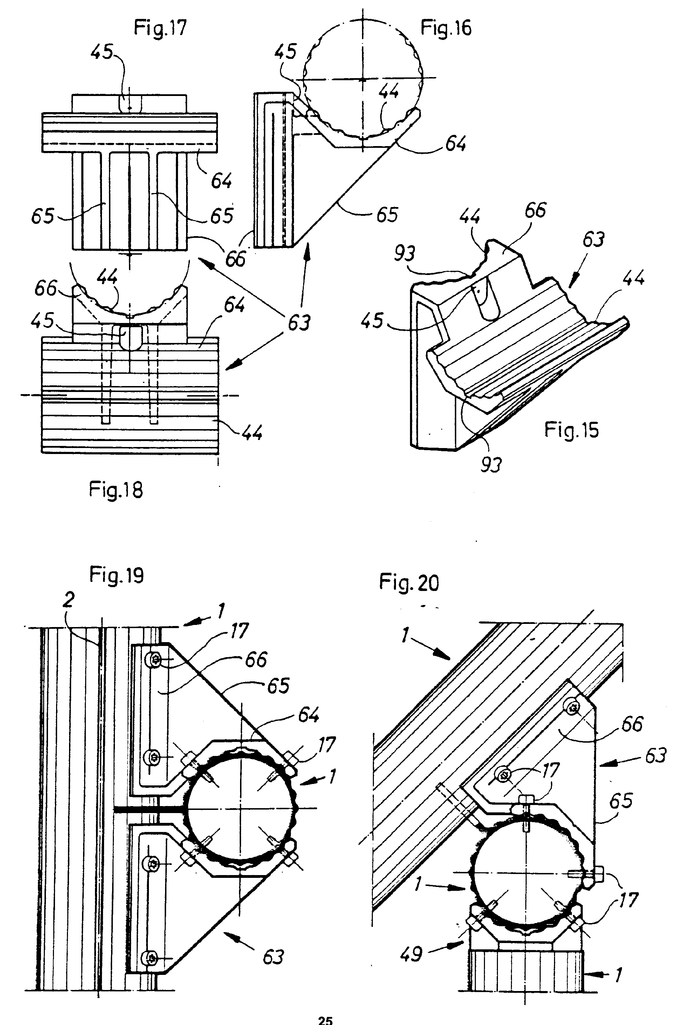

Die Fig. 15 bis 18 zeigen ein Kreuz-Tragstück 63 das zur Halterung zweier sich in 90° Winkel kreuzenden Stützrohrprofils 1 Verwendung findet.

In Fig. 19 ist ein Beispiel gezeigt wie mit zwei um 180° gedrehten an einem senkrechten Stützrohr 1 anliegenden Kreuz-Tragstücken 63 ein waagerechtes Stützrohrprofil in die beiden Anschlußmulden 64 eingespannt ist. Durch die Profilierung 44 ist eine kraftbündige Verschraubung des Stützrohres 1 gewährleistet.

In Fig. 20 ist ein waagerechtes Stützrohr 1 mit dem Winkel-Tragansatz 49 horizontal gelagert und mittels eines Kreuz-Tragstückes 63 verläuft ein weiteres Stützrohr 1 in der Funktion einer Pfette um 90° kreuzend um horizontal gelagerten Stützrohr.

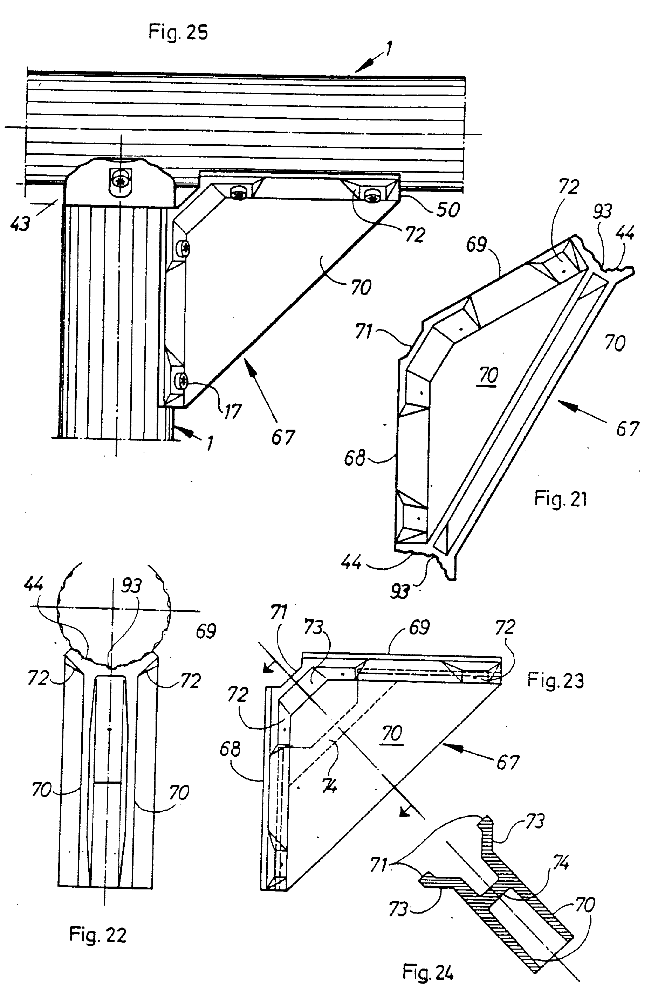

Die Fig. 21 bis 24 zeigen einen stumpfen Winkelansatz (90° Winkel) 67 welcher hauptsächlich als Winkelaussteifung Verwendung findet. Die beiden rechtwinklig zueinanderstehenden Anschlußstücke 68, 69 weisen eine kleinere Aufnahmemulde 44 auf - Kreissegment 90°. Für die Aussteifung dienen die zwei Formrippen 70, der Steg 74 und zwischen den beiden Anschlußstücken 68, 69 der Verbindungssteg 73.

Im Anwendungsbeispiel Fig. 25 wird ein Winkel-Ansatz 43 in Verbindung mit einem stumpfen Winkel-Ansatz 67 zur Aussteifung gezeigt. Die Aussparung 71 ist so groß, daß der zylindrische Bund des Winkel-Ansatzes 43 ohne Behinderung in das senkrechte Stützrohr 1 eingesetzt werden kann. Bedingt durch die kleinere Aufnahmemulde 44 sind beidseitig des Anschlußstückes 68, 69 Verstärkungen 72 angesetzt damit die Verschraubung 17 zentrisch zur Achse des Stützrohres 1 geleitet wird.

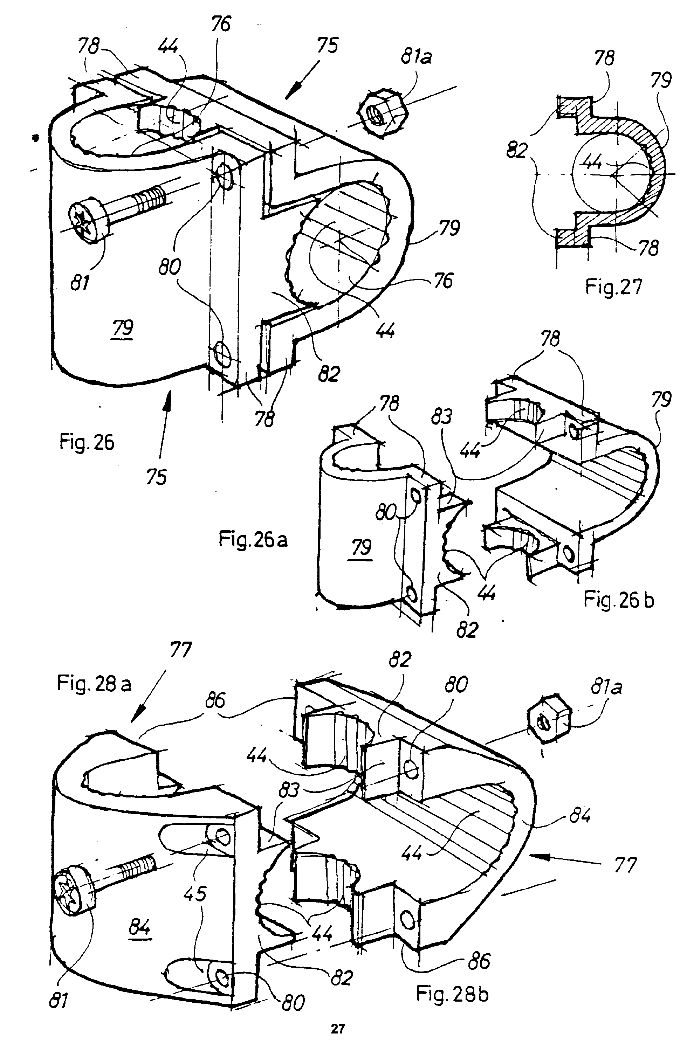

Das in den Fig. 26 bis 27 dargestellte Kreuz-Flanschstück 75 besteht im wesentlichen aus der Flansch-Muffe 79 und den beiden Seitenflanschen 78. Diese sind mit Schraubbohrungen 80 versehen. Die als Bettung 76 bezeichnete Innenfläche der Flansch-Muffe 79 ist mit der verzahnungsartigen Aufnahmemulde 44 zum teilweisen Umschließen eines Stützrohres versehen.

In Fig. 26 sind zwei um 90° geschwenkt zusammenwirkende Kreuz-Flanschstücke 75 dargestellt, die mittels der Zylinderkopfschrauben 81 und Sechskantmuttern 81a verbindbar sind. Um dieses Verbinden zu ermöglichen, sind die Schraubbohrungen 80 an den Eckpunkten eines Quadrates angeordnet.

In den Fig. 26a/26b sind die beiden Kreuz-Flanschstücke 75 vor dem Zusammenfügen dargestellt.

Eine Schnittdarstellung quer zur Achse des aufzunehmenden Stützrohres zeigt Fig. 27. Wie daraus ersichtlich ist, beträgt der Sektor der Verzahnungs-Ausbildung der Aufnahmemulde 44 90°.

Das Kreuz-Verbindungsstück 77 nach den Fig. 28a/28b weist ebenfalls eine Flansch-Muffe 84 auf, deren Innenseite mit einer Aufnahmemulde 44 mit dem verzahnungsartigen Anlageprofil für ein Stützrohr versehen ist. Statt der Seitenflanschen ist das Kreuz-Verbindungsstück 77 mit vier Flansch-Anschlußflächen 86 versehen, die ebenfalls an den Eckpunkten eines Quadrates angeordnet sind. In diese münden die Schraubbohrungen 80, deren Auflageflächen für die Köpfe der Zylinderkopfschrauben 81 durch Einstiche 45 in die Flansch-Muffe 84 gebildet sind. Diese Gestaltungsweise ist insbesondere dann vorteilhaft, wenn dieses Anschluß-Element aus einem Gußwerkstoff, beispielsweise aus Spritzguß hergestellt werden soll.

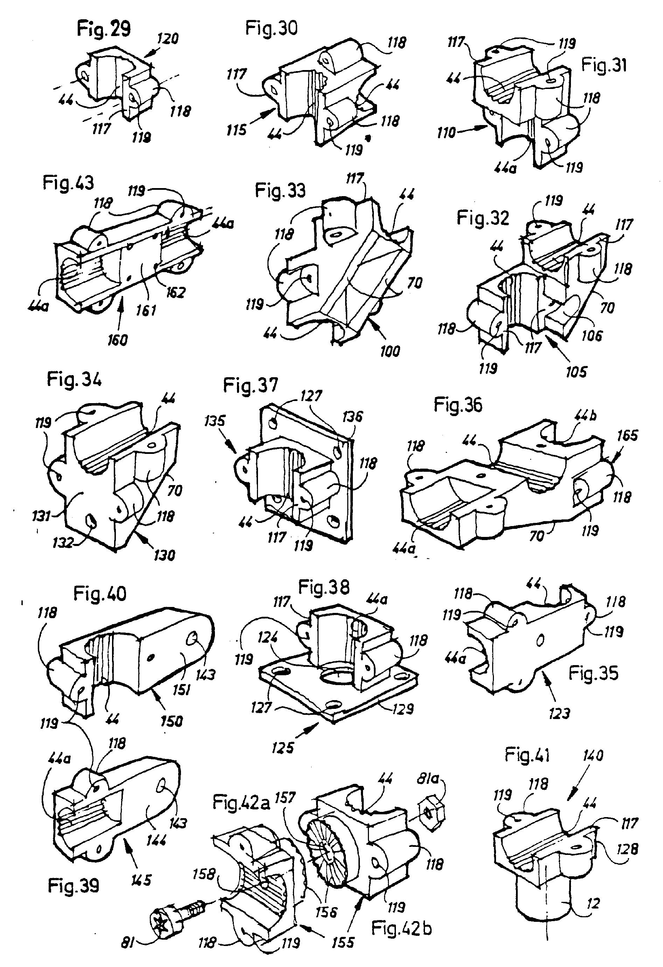

Das einfachste Anschluß-Element ist ein Klemmstück 120 gemäß Fig. 29, welches im wesentlichen aus einer Aufnahmemulde 44 mit dem verzahnungsartigen Anlageprofil für ein Stützrohr besteht und beiderseits Ausbuchtungen 118 für Schraubbohrungen 119 aufweist. Dieses Klemmstück ist dazu bestimmt, als eine Art Rohrschelle in Kombination mit zahlreichen anderen Anschluß-Elementen verwendet zu werden, beispielsweise mit dem Winkelklemmstück 110 gemäß Fig. 31. Dieses besteht aus zwei einstückig ineinander übergehenden, einen rechten Winkel zueinander bildenden Quaderteilen, von denen jeder mit einer Aufnahmemulde für ein Stützrohr versehen ist, deren Achsen einander schneiden, und wobei eine der Ausnahmemulden als Sackmulde ausgebildet ist und stumpf auf den Quaderteil der anderen Aufnahmemulde stößt. .Mit Hilfe von zwei Klemmstücken 120 kann das Ende eines Stützrohres eingespannt werden, während in die zweite Aufnahmemulde 44 ein durchgehendes Stützrohr aufgenommen und befestigt werden kann. Dieses Anschluß-Element 110 kann daher für eine gleichartige Konstruktion verwendet werden, wie der Winkel-Ansatz 43 bzw. der Winkel-Tragansatz 49. Die Verbindungsweise mit dem Winkelklemmstück 110 unterscheidet sich jedoch vor allem dadurch, daß die daran befestigten Stützrohre mittels der Klemmstücke 120 vollständig umfaßt, und unter hoher Spannung geklemmt werden können, während der Eingriff der verzahnungsartigen Profile bei dem Winkel-Ansatz 43 bzw. dem Winkel-Tragansatz 49 durch die Spannschrauben hergestellt und aufrechterhalten werden muß.

Dasselbe gilt auch für die weiteren Konfigurationen von Anschluß-Elementen nach diesem Prinzip, beispielsweise für das Kreuzklemmstück 115 gemäß Fig. 30. Um die kreuzende Verbindung von zwei Stützrohren herzustellen, die mit diesem Kreuzklemmstück erreicht werden kann, bedarf es zweier Kreuz-Tragstücke 63, wie aus Fig. 19 ersichtlich ist. Bei der Verwendung des Kreuzklemmstückes 115 sind zur Herstellung dieser Verbindung zwei Klemmstücke 120 erforderlich. Das Kreuzklemmstück 115 weist eine etwa quaderförmige Gestalt auf, die auf zwei einander gegenüberliegenden Seiten mit je einer Aufnahmemulde 44 für ein Stützrohr versehen ist, deren Achsen in zwei in einem Abstand von einander parallel verlaufenden Ebenen liegen und einen rechten Winkel zueinander bilden. In Abwandlung hiervon ist es selbstverständlich auch möglich, daß die Achsen der beiden Aufnahmemulden einen schiefen Winkel bilden. Erforderlich ist es lediglich, daß beidseitig der Aufnahmemulden Ausbuchtungen 118 für die Schraubbohrungen 119 vorhanden sind.

Das Anschluß-Element gemäß Fig. 32 ist ein Winkelabsatz-Klemmstück 105, welches aus zwei einstückig ineinander übergehenden, einen rechten Winkel zueinander bildenden Quaderteilen besteht, die mittels zweier Formrippen 70 miteinander verbunden sind. Jedes Quaderteil ist mit einer Aufnahmemulde 44 versehen, deren Achsen sich in einer Ebene schneiden, wobei diese Achsen in einem rechten Winkel zueinander stehen. Die Stirnflächen der beiden Quaderteile mit ihren Aufnahmemulden stoßen aufeinander und schneiden sich in einer Geradere, die quer zur Achsebene der Aufnahmemulden 44 verläuft. Beidseitig jeder der Aufnahmemulden 44 sind paarweise Ausbuchtungen 118 oder Vertiefungen 106 für Schraubbohrungen 119 angebracht, die dazu dienen, die anzuschließendem Stützrohre mittels zweier Klemmstücke 120 festzuspannen.

Ebenfalls zur Verbindung von zwei Stützrohren, die sich in ihren Achsen schneiden, dient auch das Winkelschenkel-Klemmstück 100 gemäß Fig. 33. Es besteht aus zwei einstückig miteinander verbundenen, einen Winkel zueinander bildenden Schenkelteilen, die mittels zwei Formrippen 70 gegeneinander abgestützt sind. Jeder der beiden Winkelschenkel ist mit je einer Aufnahmemulde 44 versehen, deren Achsen sich schneiden. Im Gegensatz zu dem Winkelabsatz-Klemmsfück 105 liegen beim Winkelschenkel-Klemmstück 100 die Aufnahmemulden 44 in derselben Ebene. Diese sind auch hier mit paarweise angeordneten Schraubbohrungen 119 versehen, die in seitlichen Ausbuchtungen 118 angeordnet sind und zum Zusammenklemmen mit dem Klemmstück 120 dienen.

Ein weiteres Anschluß-Element ist in Fig. 35 dargestellt und als langes Kreuzflanschstück 123 bezeichnet. Es besteht aus einem quaderähnlichen Werkstück, welches zwei mit ihren Achsen in einer Ebene liegenden Aufnahmemulden 44 versehen ist, die in einem rechten Winkel zueinander stehen. Eine der beiden Aufnahmemulden ist als Sackmulde ausgebildet. Diese lange Kreuzflanschstück 123 ist mit seinen den Aufnahmemulden zugeordneten Schraubbohrungen 119 derart gestaltet, daß es mit einem zweiten derartigen Kreuzflanschstück zusammen zum Anschließen von zwei sich in derselben Ebene schneidenden Stützrohren verwendet werden kann. Es ist jedoch auch möglich, statt dessen zwei Klemmstücke 120 zum Anschließen der Stützrohre zu benutzen.

Das Flanschklemmstück 130 gemäß Fig. 34 ist mit einer Aufnahmemulde 44 versehen, deren Achse in einem rechten Winkel zu seiner ebenen Flanschfläche 131 steht. Die Aussteifung wird durch zwei Formrippen 70 erreicht. Mittels dieser Flanschfläche 131 ist es möglich, das Flanschklemmstück an eine ebene Gegenfläche mittels Verschraubung anzuschließen, wofür die Schraubbohrungen 119 vorgesehen sind. Zusätzlich können auch noch weitere Schraubbohrungen, wie mit 132 angedeutet, angebracht werden.

Ein weiteres besonders vorteilhaftes Anschluß-Element ist in Fig. 36 dargestellt und als Dreifach-Kreuzklemmstück 165 bezeichnet. Es ist mit drei Aufnahmemulden versehen, von denen zwei sich schneidend in einer Ebene liegen, wobei die eine als Sackaufnahmemulde 44a stumpf zur anderen hin verläuft, während eine dritte Aufnahmemulde 44b die Achsen der beiden anderen Aufnahmemulden 44 und 44a in einer Ebene parallel zu der Ebene der beiden anderen Aufnahmemulden kreuzend verläuft. Alle drei Aufnahmemulden 44, 44a, 44b sind mit paarweise angeordneten Schraubbohrungen 119 versehen, die in entsprechenden Ausbuchtungen angebracht sind. Auch hier können zwei in einer Ebene liegende, sich schneidende Stützrohre mit Hilfe eines Kreuzflanschstückes 123 miteinander verbunden werden, während das dritte Stützrohr, welches die Ebene der beiden anderen Stützrohre kreuzt, mit Hilfe des Klemmstückes 120 befestigt wird. Dieses Anschluß-Element ist sehr vielseitig einsetzbar, weil es als Verbindungsteil eines Knotenpunktes benutzt werden kann.

Ein weiteres Anschluß-Element ist als Klemmstück mit Anschlußplatte 135 ausgebildet (Fig. 37). Es ist mit nur einer Aufnahmemulde 44 für nur ein Stützrohr versehen, dessen Achse parallel zur Befestigungsebene seiner Anschlußplatte 136 verläuft. Auch hier ist die Aufnahmemulde 44 mit Schraubbohrungen 127 versehen. Dieses Anschluß-Element ist beispielsweise zum Anschließen eines horizontal liegenden Stützrohres auf einer Fundamentplatte oder aber eines vertikal stehenden Stützrohres an einem bestehenden Bauwerk benutzbar.

Eine ähnliche Ausbildungsweise zeigt das Fußklemmstück 125 gemäß Fig. 38. Es ist mit einer Sack-Aufnahmemulde 44a versehen, die senkrecht zu seiner ebenen Fußplatte 129 gerichtet ist. Die Fußplatte 129 ist mit einem Ver- bzw. Entsorgungsloch 124 versehen, dessen Durchmesser kleiner als der Innendurchmesser des Stützrohres 1 ist. Sowohl die Aufnahmemulde 44a wie auch die Fußplatte 129 sind mit Schraubbohrungen 119 bzw. 127 zum Befestigen eines Klemmstückses 120 bzw. zum Anschließen der Fußplatte an einem Fundament ausgerüstet.

Das Steck-Klemmstück 140 nach der Fig. 41 ist zum Einstecken in ein Stützrohr mit einem Einsatzstück 12 ausgerüstet, an welchem rechtwinklig zu seiner Achse eine Aufnahmemulde 44 angebracht ist. Dieses Teil erfüllt eine ähnliche Aufgabe wie der Winkel-Ansatz 43 oder der Winkel-Tragansatz 49. Es ist jedoch möglich, daß mittels des Klemmstückes 120 eingespannte Stützrohre auch nach der Montage noch um seine Längsachse zu Justierzwecken zu verschieben. An dem EinsatzStück 12 ist der eigentliche Klemmstückkörper 128 angeschlossen, welcher mit Ausbuchtungen 118 zur Aufnahme von Schraubbohrungen 119 versehen ist.

Vielfache Verwendungsmöglichkeiten bietet das Laschenklemmstück 145 gemäß Fig. 39. Es besteht aus einem länglicheen Körper 144, der mit einer Sack-Aufnahmemulde 44a versehen ist, deren Achse zur laschenartigen Verlängerung 144 hinweist, die mit einer Bohrung 143 zum Anschluß an einen Festpunkt oder einen Zug/Druckstab ausgerüstet ist. Auch hier ist die Sack-Aufnahmemulde 44a beidseitig mit Schraubbohrungen 119 versehen, die in entsprechenden Ausbuchtungen 118 untergebracht sind. Auch hier dient zum Klemmen des Stützrohres 1 entweder ein gleiches Teil 145 oder Klemmstück 120.

Ein ähnliches Anschluß-Element ist das Laschen-Querklemmstück 150 gemäß Fig. 40. Hier ist jedoch die Aufnahmemulde 44 quer zur laschenartigen Verlängerung 151 gerichtet, so daß ein in die Aufnahmemulde mittels eines Klemmstückes 120 oder einen zweiten Laschen-Querklemmstücks 150 eingespanntes Stützrohr nach beiden Richtungen hin verschoben werden kann. Auch hier ist die laschenartige Verlängerung 151 mit wenigstens einer Bohrung 143 zum Anschluß an einen Festpunkt oder einen Zug/Druckstab ausgerüstet.

Ein ebenfalls vielfach verwendbares Anschluß-Element ist als Winkelverstell-Klemmstück 155 gemäß Fig. 42a/42b ausgestaltet. Es besteht aus zwei zusammenwirkenden Klemmstücken, deren einander zugewandte Rückseiten mit ineinander eingreifenden konzentrischen Verzahnungen 156 ausgerüstet sind. Die beiden einander entgegengerichteten Verzahnungen werden mittels einer die zentrischen Bohrungen 157 durchsetzenden Verschraubung - Schrauben, Zylinderkopf und Mutter im Gegenstück ruhen im Senkloch 158 - gegeneinander verspannt, so daß die einmal fixierte Winkelstellung nicht mehr verändert werden kann, sondern eine starre Verbindung darstellt. Auch hier kommt das Klemmstück 120 in Anwendung.

Das Muffenklemmstück 160 gemäß Fig. 43 ist als länglicher Quader geformt, der beidendig mit je einer gleichachsig ausgerichteten Sack-Aufnahmemulde 44a versehen ist. Zwischen den beiden Aufnahmemulden 44a durchsetzen vier Schraubbohrungen 162 das quaderförmige Teil, die zum Befestigen an anderen Konstruktionselementen dienen. Ferner sind die beiden Sack-Aufnahmemulden 44a mit beiderseits paarweise angeordneten Schraubbohrungen 119 versehen, die in Ausbuchtungen 118 untergebracht sind. Dieses Anschluß-Element kann mit einem weiteren Muffenklemmstück 160 zusammmen zum Festspannen von zwei gleichachsig verlaufenden Stützrohren dienen. Mittels der Schraubbohrungen 162 kann das doppelte Muffenklemmstück an ein beliebiges anderes Konstruktionsteil angeschlossen werden. Es ist aber auch möglich, die beiden Stützrohre mit zwei Klemmstücken 120 anzuschließen, so daß das Mittelfeld zwischen den beiden Stützrohren freibleibt und zum Anschluß an ein anderes Bauelement dienen kann. Ferner können die auf dem quaderförmigen Mittelteil 161 angebrachten Bohrungen 162 dazu dienen, daß ein gleiches Muffenstück, um 90° gedreht, verschraubt wird und sich nun vier Stützrohre kreuzend schneiden. Für diesen Fall werden vier Klemmstücke 120 benötigt.

Bezugszeichenliste

1    Stützrohr

1a   Stützrohr nach unten weisend

2    Außensteg

3    Anschlußprofil m. Steg

4    Anschluß-Wandteil

5    Anschluß-Wandteil

6    Schraubenloch

7    Führungsrippen

8    Gewinde-Endstück

9    konischer Hut

10   zylindrischer Bund

11   Gewindebohrung

12   Einsatz-Stück

13   Durchmesser-Vertiefung

14   Beton Anker

15   Mutter

16   Scheibe

17   Spannschraube oder Blindniet

18   Gewindebolzen

19   Anlageplatte m. Gewindeloch

20   flaches Anschlußstück

21   Abschlußplatte

22   Schraubenloch

23   I-Eisen

24   Bef.Schraube

25   Bodenplatte m. Gewindebolzen

26   Gewindebolzen

27   Anker-Gewindebolzen

28   Hutmutter

29   Lastring

| | |
|---|---|
| 30 | Kranhaken/Hängegeschirr |
| 31 | Raumfachwerkknoten |
| 32 | Gewindebohrung (Einsatz) |
| 33 | Zwischenstück f. 31 |
| 34 | Zug/Druckstab |
| 35 | Gabelhalter |
| 36 | Kabelklemme |
| 37 | Zugkabel |
| 38 | Verschraubung |
| 39 | Klarsichtscheibe |
| 40 | Verglasungsdichtung f. 39 |
| 41 | Klemmprofil f. 40 |
| 42 | Zug/Druck-Strebe |
| 43 | Winkel-Ansatz |
| 44 | Aufnahme f. Stützrohrprofilierung |
| 44a | Sackmulde Aufnahme f. Stützrohrprofilierung |
| 44b | weitere Aufnahmemulde |
| 45 | Schrägeinstich f. Spannschraube |
| 46 | Winkelprofil |
| 47 | Verschraubung |
| 48 | Halterung f. 39 |
| 49 | Winkel-Tragansatz |
| 50 | Tragbettung |
| 51 | Rinnenprofil |
| 52 | Montagebügel |
| 53 | Glashalterungsprofil |
| 54 | Spannelement f. Verglasung |
| 55 | Verschraubung f. 52 und 56 |
| 56 | Auflagebügel |
| 57 | Auflageprofil f. Dach- od. Wandelement |
| 58 | Dichtungsprofil |
| 59 | Klemmprofil |
| 60 | Dach- od. Wandelement (Doppelstegplatte) |
| 61 | Spannschraube |
| 62 | Verglasungsdichtung |

| 63 | Kreuz-Tragstück |
|---|---|
| 64 | Anschlußmulde |
| 65 | Versteifungsrippe |
| 66 | Anschlußflansch |
| 67 | Stumpfer Winkelansatz |
| 68 | Anschlußstück |
| 69 | Anschlußstück |
| 70 | Formrippe |
| 71 | Aussparung |
| 72 | Verstärkung |
| 73 | Verbindungssteg |
| 74 | Steg |
| 75 | Kreuz-Spannflansch |
| 76 | Bettung |
| 77 | Var. zu 75 |
| 78 | Seitenflansch |
| 79 | Flansch-Muffe |
| 80 | Schraubenloch |
| 81 | Zylinderkopfschraube |
| 81a | 6-kt-Mutter |
| 82 | Profil-Druckstück |
| 83 | Anschluß-Wandung |
| 84 | Flansch-Muffe |
| 85 | |
| 86 | Flansch-Anschlußfläche |
| 87 | |
| 88 | 6-kt-Steckschraube |
| 89 | 6-kt-Mutter |
| 90 | Flansch-Muffe |
| 91 | Seitenflansch |
| 92 | Profil-Druckstück |
| 93 | Profil Vertiefung f. 2 |
| 94 | |
| 95 | |
| 96 | |

97

98

99

100   Winkelschenkel-Klemmstück

101

102

103   Gelenk-Anschlußklemme

104   Spannschelle

105   Winkel-Absatz-Klemmstück

106   Vertiefung f. Ausbuchtung

107

108   Schraubenloch

109   Spannflansch

110   Winkelklemmstück

111   Gegenflansch zu 104

112

113

114

115   Kreuzklemmstück

116

117   Anschlußfläche f. Klemmstück

118   Ausbuchtung f. Schraubenloch

119   Schraubenloch

120   Flansch-Schelle

121   Doppel-Flansch-Schelle

122   Winkel-Flansch

123   langes Kreuzflanschstück

124   Ver- od. Entsorgungsloch im Flanschteil

125   Fußklemmstück

126   Winkelspannflansch m. Einsatzstück

127   Schraubenlöcher

128   Winkelspannflansch m. Einsatzstück

129   Fußplatte (flächenwinklig)

130   Flanschklemmstück

131   Flanschfläche (flächenwinklig)

EP 0 333 772 B1

132   zusätzliches Schraubenloch

133

134

135   Klemmstück m. Anschlußplatte

136   Anschlußplatte (flächenparallel)

137

138

139

140   Steckklemmstück

141

142

143   Bohrung f. Zug/Druckstab od. Gelenk

144   laschenartige Verlängerung f. 145

145   Laschenklemmstück

146

147

148

149

150   Laschen-Querklemmstück

151   laschenartige Verlängerung f. 150

152

153

154

155   Winkelverstell-Klemmstück

156   konzentrische Verzahnung

157   zentrische Bohrung

158   Senkloch f. 81 u. 81a

159

160   Muffenklemmstück

161   quaderförmiges Mittelteil

162   quadratisch angeordnete Bohrung

163

164

165   Dreifach-Kreuzklemmstück

**Patentansprüche**

1. Bauelement-System für Skelettrahmenkonstruktionen unter Verwendung von säulenartigen Stützrohren (1) mit achsparallel an deren Außenumfang sich erstreckenden, rinnenähnlichen Vertiefungen, und von in diese

14

Vertiefungen nach Art einer Verzahnung formschlüssig eingreifenden Gegenprofilen an den Innenflächen von lösbar mit den Stützrohren verbindbaren Anschluß-Elementen (3), wobei der am Außenumfang der Stützrohre verzahnungsartig eingreifende Sektor der Anlageprofile der Anschluß-Elemente (3) einen Umgriffwinkel zwischen 60° und 120° aufweist, dadurch gekennzeichnet, daß die Anschluß-Element mit wenigstens einem weiteren verzahnungsartigen Anlageprofil zum lösbaren, formschlüssigen Verbinden mit wenigstens einem weiteren Stützrohr in einem Winkel steht.

2. Bauelement-System nach Anspruch 1, dadurch gekennzeichnet, daß die Achsen von je zwei mittels eines Anschluß-Elements lösbar formschlüssig verbundenen Stützrohren in einer ebene verlaufen und sich schneiden.

3. Bauelement-System nach Anspruch 1, dadurch gekennzeichnet, daß die Achsen von je zwei mittels eines Anschluß-Elements lösbar formschlüssig verbundenen Stützrohren in zwei parallel zueinander stehenden Ebenen verlaufen und sich kreuzen.

4. Bauelement-System nach Anspruch 1, dadurch gekennzeichnet, daß die Achsen von je zwei mittels eines Anschluß-Elements lösbar formschlüssig verbundenen Stützrohren in zwei in einem Winkel zueinander stehenden Ebenen verlaufen und sich schneiden.

5. Bauelement-System nach den Ansprüchen 1 und 2, dadurch gekennzeichnet, daß ein Anschluß-Element als Winkel-Ansatz (43) ausgebildet und mit einem unter leichtem Preßsitz in ein erstes Stützrohr (1) bis zum zylindrischen Bund (10) einfügbares Einsatzstück (12) sowie mit einer in einer schneidenden Querachse verlaufende Aufnahmemulde (44) mit einem verzahnungsartigen Anlageprofil zum formschlüssigen Eingriff mit einem zweiten Stützrohr (1) versehen ist.

6. Bauelement-System nach Anspruch 5, dadurch gekennzeichnet, daß die Aufnahmemulde (44) mit wenigstens zwei beidseitig angebrachten, zur Achse des anzuschließenden zweiten Stützrohres gerichteten, zum Durchstecken von Spannschrauben (17) dienenden Bohrungen versehen sind, die in Schrägeinstichen (45) münden.

7. Bauelement-System nach Anspruch 5, dadurch gekennzeichnet, daß die Aufnahmemulde (44) als beidseitig über das Einsatzstück (12) hinausreichende Tragbettung (50) ausgebildet ist.

8. Bauelement-System nach den Ansprüchen 1 und 3, dadurch gekennzeichnet, daß ein Anschluß-Element als Kreuz-Tragstück (63) ausgebildet und mit zwei in einem Winkel von 90° zueinander angeordneten Aufnahmemulden (44) für zwei Stützrohre (1) versehen ist, die sich in geringem Abstand kreuzend in zwei parallelen ebenen verlaufen.

9. Bauelement-System nach Anspruch 8, dadurch gekennzeichnet, daß der Anschlußflansch (66) und die Anschlußmulde (64) für die Stützrohre (1), die mit dem verzahnungsartigen Anlageprofil versehen sind, durch wenigstens eine Versteifungsrippe (65) verbunden sind.

10. Baulement-System nach den Ansprüchen 8 und 9, dadurch gekennzeichnet, daß die Anschlußmulde (64) eine größere Länge als der Anschlußflansch (66) aufweist.

11. Bauelement-System nach Anspruch 8, dadurch gekennzeichnet, daß jede der beiden Aufnahmemulden (44) des Anschlußflansches (66) und der Anschlußmulde (64) mit jeweils mindestens zwei zur Achse des jeweils anzuschließenden Stützrohres (1) hin gerichteten Bohrungen zum Durchstecken von Spannschrauben (17) versehen sind.

12. Bauelement-System nach den Ansprüchen 1 und 2, dadurch gekennzeichnet, daß ein Anschluß-Element als stumpfer Winkel-Ansatz (67) ausgebildet und mit zwei im rechten Winkel zueinander stehenden, sich in einer Ebene erstreckenden Anschlußstücken (68, 69) mit Aufnahmemulden (44) für jeweils zwei Stützrohre (1) versehen ist.

13. Bauelement-System nach Anspruch 12, dadurch gekennzeichnet, daß die Anschlußstücke (68, 69) mittels wenigstens einer Formrippe (70) gegeneinander abgestützt sind.

14. Bauelement-System nach Anspruch 12, dadurch gekennzeichnet, daß jedes Anschlußstück mit jeweils mindestens zwei zur Achse des anzuschließenden Stützrohres (1) hin gerichteten Bohrungen zum Durchstecken von Spannschrauben (17) versehen sind.

15. Bauelement-System nach einem der Ansprüche 1 bis 3, dadurch gekennzeichnet, daß ein Anschluß-Element als Kreuz-Flanschstück (75) ausgebildet und mit einer Umfassungsmulde (76) mit einem verzahnungsartigen Anlageprofil (44) für ein Stützrohr (1) sowie mit zwei an die das Anlageprofil (44) enthaltende FlanschMuffe (79) anschließenden Seitenflanschen (78) mit Schraubbohrungen (80) versehen ist, an die sich beidseitig abgewinkelt je ein Profil-Druckstück (82) mit einem weiteren Anlageprofil (44) anschließt, welches im Zusammenwirken mit einem zeiten um 90° geschwenkten, ein zweites Stützrohr (1) aufnehmenden Kreuz-Flanschstück (75) in verschraubtem Zustand in dessen Aufnahmemulde (44) preßt.

16. Bauelement-System nach einem der Ansprüche 1 bis 3, dadurch gekennzeichnet, daß ein Anschluß-Element als Kreuz-Verbindungsstück (77) ausgebildet und mit einer Umfassungsmulde (76)

15

EP 0 333 772 B1

mit einem verzahnungsartigen Anlageprofil (44) für ein Stützrohr (1) sowie mit beidseitig angebrachten Einstichen (45) mit rechtwinklig zu den Flanschflächen (86) verlaufenden und in dies mündenden Schraubbohrungen (80) versehen ist und daß die beidseitigen Flanschflächen (86) mit zwischen den Schraubbohrungen (80) angeordneten, hervorstehenden Profil-Druckstücken (82) mit Anlageprofilen (44) versehen sind, welche im Zusammenwirken mit einem zweiten um 90° geschwenkten, ein zweites Stützrohr (1) aufnehmenden Kreuz-Verbindungsstück (77) in verschraubbartem Zustand in dessen Aufnahmemulde (44) preßt.

17. Bauelement-System nach einem der Ansprüche 1 bis 4, dadurch gekennzeichnet,
daß ein Anschluß-Element als Klemmstück (120) ausgebildet und mit einer Aufnahmemulde (44) mit verzahnungsartigem Anlageprofil für ein Stützrohr (1) sowie beiderseits mit Ausbuchtungen (118) für Schraubbohrungen (119) versehen ist.

18. Bauelement-System nach einem der Ansprüche 1 bis 4, dadurch gekennzeichnet,
daß ein Anschluß-Element als Kreuzklemmstück (115) ausgebildet ist und eine etwa quaderförmige Gestalt aufweist, die auf zwei einander gegenüberliegenden Seiten mit je einer Aufnahmemulde (44) für ein Stützrohr (1) versehen ist, deren Achsen in zwei in einem Abstand voneinander parallel verlaufenden Ebenen liegen und einen Winkel zueinander bilden, und daß beidseitig jeder Aufnahmemulde (44) paarweise Ausbuchtungen (118) für Schraubbohrungen (119) angebracht sind.

19. Bauelement-System nach einem der Ansprüche 1 bis 4, dadurch gekennzeichnet,
daß ein Anschluß-Element als Winkelklemmstück (110) ausgebildet ist und aus zwei einstückig ineinander übergehenden einen rechten Winkel zueinander bildenden Quaderteilen besteht, von denen jeder eine Aufnahmemulde (44) aufweist, deren Achsen einander schneiden, wobei eine der Aufnahmemulden stumpf auf den Quaderteil der anderen Aufnahmemulde stößt, und daß beidseitig jeder Aufnahmemulde (44) paarweise Ausbuchtungen (118) für Schraubbohrungen (119) angebracht sind.

20. Bauelement-System nach einem der Ansprüche 1 bis 4, dadurch gekennzeichnet,
daß ein Anschluß-Element als Winkelabsatz-Klemmstück (105) ausgebildet ist und aus zwei einstückig ineinanderübergehenden, einen rechten Winkel zueinander bildenden Quaderteilen besteht, von denen jeder eine Aufnahmemulde (44) aufweist, deren Achsen einander schneiden, wobei die freien Stirnflächen der beiden Aufnahmemulden (44) aufeinanderstoßend sich in einer Geraden schneiden, die quer zur Achsebene der Aufnahmemulde (44) paarweise in Ausbuchtungen oder Vertiefungen (106) Schraubbohrungen angebracht sind.

21. Bauelement-System nach einem der Ansprüche 1 bis 4, dadurch gekennzeichnet,
daß ein Anschluß-Element als Winkelschenkel-Klemmstück (100) ausgebildet und zwei einstückig miteinander verbundenen einen Winkel zueinander bildenden Schenkelteilen geformt ist, von denen jedes eine Aufnahmemulde (44) aufweist, deren Achsen sich schneiden, wobei die Schenkelteile gegeneinander durch mindestens eine Formrippe versteift sind und beidseitig jeder Aufnahmemulde (44) paarweise Ausbuchtungen (118) für Schraubbohrungen (114) angeformt sind.

22. Bauelememt-System nach einem der Ansprüche 1 bis 4, dadurch gekennzeichnet,
daß ein Anschluß-Element als langes Kreuzflanschstück (123) ausgebildet und als quaderähnliches Werkstück geformt ist, welches zwei mit ihren Achsen in einer Ebene liegende Aufnahmemulden (44) aufweist, die in einem rechten (oder schiefen) Winkel zueinander stehen, und welches ferner mit den Aufnahmemulden (44) zugeordneten Schraubbohrungen versehen ist.

23. Bauelement-System nach einem der Ansprüche 1 bis 4, dadurch gekennzeichnet,
daß ein Anschluß-Element als Flanschklemmstück (130) ausgebildet und mit einer Aufnahmemulde (44) versehen ist, deren Achse in einem rechten (oder schiefen) Winkel zu seiner ebenen Flanschfläche (131) steht, mittels welcher es an eine ebene Gegenfläche mittels Verschraubungen durch Schraubbohrungen (119) anschließbar ist.

24. Bauelement-System nach einem der Ansprüche 1 bis 4, dadurch gekennzeichnet,
daß ein Anschluß-Element als Dreifach-Kreuzklemmstück (165) ausgebildet und mit drei Aufnahmemulden (44) versehen ist, von denen zwei sich schneidend in einer Ebene liegen und die eine als Sack-Aufnahmemulde (44a) stumpf zur anderen hin verläuft, während die dritte Aufnahmemulde (44b) die Achsen der beiden anderen Aufnahmemulden in einer Ebene parallel zu der Ebene einer der beiden anderen Aufnahmemulden kreuzend verläuft, und daß alle drei Aufnahmemulden (44, 44a, 44b) mit paarweise angeordneten Schraubbohrungen (119) versehen sind.

25. Bauelement-System nach einem der Ansprüche 1 bis 4, dadurch gekennzeichnet,
daß ein Anschluß-Element als Klemmstück mit Anschlußplatte (135) ausgebildet und mit einer Aufnahmemulde (44) versehen ist, deren Achse parallel zur Befestigungsebene ihrer Anschlußplatte (136) verläuft, und daß die Aufnahmemulde (44) und die Anschlußplatte (136) mit Schraubbohrungen (119 bzw. 127) versehen sind.

26. Bauelement-System nach einem der Ansprüche 1 bis 4, dadurch gekennzeichnet,
daß ein Anschluß-element als Fußklemmstück (125) ausgebildet und mit einer Sack-Aufnahmemulde (44a) versehen ist, die senkrecht (oder in einem schiefen Winkel) zu seiner ebenen Fußplatte (129) hin gerichtet ist,

16

und daß Aufnahmemulde (44a) und Fußplatte (129) mit Schraubbohrungen (119 bzw. 127) versehen sind.

27. Bauelement-System nach einem der Ansprüche 1 bis 4, dadurch gekennzeichnet, daß ein Anschluß-Element als Steck-Klemmstück (140) ausgebildet und mit einer Aufnahmemulde (44) versehen ist, deren Achse rechtwinklig (oder schiefwinklig) zu seinem Einsatz-Stück (12) zum Einstecken in ein Stützrohr (1) verläuft und die mit zwei gegenüberliegenden Ausbuchtungen (118) mit Schraublöchern (119) versehen ist.

28. Bauelement-System nach einem der Ansprüche 1 bis 3, dadurch gekennzeichnet, daß ein Anschluß-Element als Laschenklemmstück (145) ausgebildet und mit einer Sack-Aufnahmemulde (44a) versehen ist, deren Achse zur laschenartigen Verlängerung (144) hinweist, die mit einer Bohrung (143) zum Anschluß an einen Festpunkt oder einen Zug/Druckstab ausgerüstet ist.

29. Bauelement-System nach einem der Ansprüche 1 bis 4, dadurch gekennzeichnet, daß ein Anschluß-Element als Laschen-Querklemmstück (150) ausgebildet und mit einer quer zur laschenartigen Verlängerung (151) gerichteten Aufnahmemulde (44) und zugehörigen Schraubbohrungen (119) versehen ist, und daß die laschenartige Verlängerung (151) mit einer Bohrung zum Anschluß an einen Festpunkt oder einen Zug/Druckstab ausgerüstet ist.

30. Bauelement-System nach einem der Ansprüche 1 bis 4, dadurch gekennzeichnet, daß ein Anschluß-Element als Winkelverstell-Klemmstück (155) ausgebildet ist, welches aus zwei zusammenwirkenden Klemmstücken (120) besteht, deren einander zugewandten Rückseiten mit ineinander eingreifenden konzentrischen Verzahnungen (156) ausgerüstet sind, und die mittels einer die zentrischen Bohrungen (157) durchsetzenden Verschraubung gegeneinander verspannbar sind.

31. Bauelement-System nach einem der Ansprüche 1 bis 4, dadurch gekennzeichnet, daß ein Anschluß-Element als Muffenklemmstück (160) ausgebildet und als länglicher Quader geformt ist, der beidendig mit je einer gleichachsig ausgerichteten Sack-Aufnahmemulde (44a) versehen ist und mindestens zwei zwischen den letzteren angebrachten Schraubbohrungen (162) aufweist, und daß zum Anschließen der Stützrohre entweder zwei Muffenklemmstücke (160) oder zwei einfache Klemmstücke (120) zusammen mit dem Muffenklemmstück (160) dienen.

## Claims

1. A system of structural elements for skeleton frame construction using columnar support pipes (1) with ridge-like recesses extending axially parallel at their outer contour surface, which positively interlock into these recesses in the manner of serrations with counter profiles at the inner surfaxes of linking elements (3) detachably connectable or linkable with the support pipes, the sector of the mating profiles of the linking elements interengaging in a serration-like manner with the outer contour surfaces of the support pipes having a wraparound angle of between 60° and 120°, characterized in that the linking elements are provided with at least one additional serration-like mating profile for the detachable positively interlocking connection with at least one additional support pipe (1) which extends at an angle with respect to the first-mentioned support pipe.

2. A system of structural elements according to claim 1, characterized in that the axes of two support pipes connected with each other in a positively locking detachable manner by means of a linking element extend in the same plane and intersect.

3. A system of structural elements according to claim 1, characterized in that the axes of two support pipes connected with each other in a positively locking detachable manner by means of a linking element extend in two parallel planes and cross each other.

4. A system of structural elements according to claim 1, characterized in that the axes of respectively two support pipes connected with each other in a positively locking detachable manner by means of a linking element extend in two planes forming an angle with each other and intersect.

5. A system of structural elements according to the claims 1 and 2, characterized in that one linking element is constructed as an angular section extension (43) and is provided with an insert distance piece (12) insertable with a slight press fit into a first supporting pipe (1) up to the cylindrical collar (10) as well as with a receiving lodging (44) extending in an intersecting transverse axis with a serration-like contact profile for positively locking engagement with a second supporting pipe (1).

6. A system of structural elements according to claim 5, characterized in that the receiving lodging (44) is provided with at least two bores configured on both sides directed towards the axis of the second supporting pipe to be connected and serving for insertion of tension bolts (17) which bores terminate in slanted recesses (45).

7. A system of structural elements according to claim 5, characterized in that

EP 0 333 772 B1

the receiving lodging (44) is designed as a support bed (50) extending on both sides beyond the insert distance piece (12).

8. A system of structural elements according to the claims 1 and 3, characterized in that a linking element is designed as a cross support (63) and is provided with two receiving lodgings (44) arranged at an angle of 90° to each other for two support pipes (1), which cross each other at a slight spacing and extend in two parallel planes.

9. A system of structural elements according to claim 8, characterized in that the connecting flange (66) and the connecting bulge (64) for the supporting pipes (1) which are equipped with the serration-like contact profile, are connected by at least one stiffener rib (65).

10. A system of structural elements according to the claims 8 and 9, characterized in that the connection bulge (64) has a greater length than the connection flange (66).

11. A system of structural elements according to claim 8, characterized in that each of the two receiving lodgings (44) of the connecting flange (66) and the connection bulge (64) are equipped with respectively at least two bores directed towards the axis of the respective supporting pipe (1) to be connected for passage of the tension bolts (17).

12. A system of structural elements according to the claims 1 and 2, characterized in that one linking element is designed as a blunt angle section extension (67) and is provided with two connection pieces (68, 69) with receiving lodgings (44) standing at right angles to each other and extending in the same plane for respectively two supporting pipes (1).

13. A system of structural elements according to claim 12, characterized in that the connection pieces (68, 69) are supported against each other by means of at least one triangular frame (70).

14. A system of structural elements according to claim 12, characterized in that each linking piece is provided with two bores oriented towards the axis of the supporting pipe (1) to be connected for passage of tension bolts (17).

15. A system of structural elements according to one of the claims 1 to 3, characterized in that one linking element is designed as a cross flange piece (75) and is provided with an embracing bedding (76) with a serration-like contact profile (44) for a supporting pipe (1) as well as with two side flanges (78) adjacent to the flange socket (79) containing the contact profile (44), said side flanges containing bolt holes (80), with a profile pressure piece (82) angled on both sides containing an additional contact profile (44) following said side flanges (78) which contact profile (44) in cooperation with a second cross flange piece (75) swiveled through 90° and containing a second supporting pipe (1) presses said second supporting pipe in the bolted state into its receiving lodging (44).

16. A system of structural elements according to one of the claims 1 to 3, characterized in that a linking element is designed as a cross shaped connecting piece (77) with an embracing bedding (76) comprising a serration-like contact profile (44) for a supporting pipe (1) as well as with slanted recesses (45) configured on both sides with bolt holes (80) extending at right angles to the flange connection faces (86) and terminating in said recesses and that the flange connection faces (86) on both sides are provided with protruding profile pressure pieces (82) with contact profiles (44) arranged between the bolt holes (80) which in cooperation with a second cross shaped connecting piece (77) swivelled through 90° receiving a second supporting pipe (1) presses same in the bolted state into its receiving lodging (44).

17. A system of structural elements according to one of the claims 1 to 4, characterized in that one linking element is designed as a flange clip (120) and is provided with a receiving lodging (44) with serration-like contact profile for a supporting pipe (1) as well as with bolt hole bulges (118) on both sides for bolt holes (119).

18. A system of structural elements according to one of the claims 1 to 4, characterized in that one linking element is designed as a cross clamp (115) and has a somewhat block-like cuboid shape, which is provided on two opposite sides with respectively one receiving lodging (44) for a supporting pipe (1), whose axes lie in two parallel planes spaced from each other and that bolt hole bulges (118) for bolt holes (119) are configured in pairs on both sides of each receiving lodging (44).

19. A system of structural elements according to one of the claims 1 to 4, characterized in that one linking element is designed as an angular clamp (110) which consists of two cuboid parts forming a right angle between themselves and one transiting into the other so as to form one piece, of which each cuboid part comprises one receiving lodging (44), the axes of which receiving lodgings intersect each other wherein one of the receiving lodgings forms a butt joint with the cuboid portion of the other receiving lodging, and that on both sides of each receiving lodging (44) bolt hole bulges (118) are configured in pairs for bolt holes (119).

20. A system of structural elements according to one of the claims 1 to 4, characterized in that one linking element is designed as an angular offset clamp (105) consisting of two cuboid portions forming a right angle between themselves and transiting into each other so as to form one piece, of which each comprises

18

EP 0 333 772 B1

a receiving lodging (44), the axes of which lodgings intersect each other, wherein the free end faces of the two receiving lodgings (44) abutting upon each other intersect in a straight line, and where bolt holes are configured transversely to the axial plane of the receiving lodging (44) in pairs in bolt hole bulges (106).

21. A system of structural elements according to one of the claims 1 to 4, characterized in that one linking element is designed as an angular leg clamping piece (100) and is shaped out of two leg portions forming an angle between themselves and connected with each other so as to form one piece, of which each comprises a receiving lodging (44) the axes of these receiving lodgings intersecting each other, wherein the leg portions are stiffened against each other by means of at least one shaped rib and in that paired bolt hole bulges (118) for bolt holes (119) are formed on both sides of each receiving lodging (44).

22. A system of structural elements according to one of the claims 1 to 4, characterized in that one linking element is designed as a long cross flange (123) and is shaped as a cuboid similar workpiece, which comprises two receiving lodgings (44) whose axes lie in one plane, which stand at a right angle (or at an oblique angle) to each other, said cross flange being provided with bolt holes assigned to the receiving lodgings (44).

23. A system of structural elements according to one of the claims 1 to 4, characterized in that one linking element is designed as a flange clamp (130) and is provided with a receiving lodging (44), whose axis stands at right angles (or at an oblique angle) with respect to its flat flange face (131), with which it is connectable with a flat opposite face by means of bolts passing through bolt holes (119).

24. A system of structural elements according to one of the claims 1 to 4, characterized in that one linking element is designed as a triple cross clamp (165) and is provided with three receiving lodgings (44), of which two intersecting each other lie in the same plane and of which one being a blind receiving lodging (44a) extends so as to form a butt joint with the other, while the third receiving lodging (44b) extends so as to be crossing the axes of the two other receiving lodgings in a plane parallel to the plane of one of the two other receiving lodgings, and that all three receiving lodgings (44, 44a, 44b) are provided with bolt holes (119) arranged in pairs.

25. A system of structural elements according to one of the claims 1 to 4, characterized in that one linking element is designed as a clamp with connection plate (135) and is provided with a receiving lodging (44), whose axis extends parallel to the attachment plane of its connection plate (136), and that the receiving lodging (44) and the connection plate (136) are provided with bolt holes (119) or (127).

26. A system of structural elements according to one of the claims 1 to 4, characterized in that one linking element is designed as a foot clamp (125) and is provided with a dead end receiving lodging (44a), which is oriented perpendicularly (or at an oblique angle) to its flat foot plate (129), and that the receiving lodging (44a) and the foot plate (121) are provided with bolt holes (119) or (127).

27. A system of structural elements according to one of the claims 1 to 4, characterized in that one linking element is designed as a plug clamp (140) and is provided with a receiving lodging (44), whose axis extends at right angles (or at an oblique angle) with respect to its insert piece (12) for insertion into a supporting pipe (1) and which is provided with two opposite bulges (118) with bolt holes (119).

28. A system of structural elements according to one of the claims 1 to 3, characterized in that one linking element is designed as a shackle clamp (145) and is equipped with a dead end receiving lodging (44a), whose axis points towards the shackle-like extension (144), which is equipped with a bore (143) for connecting to an anchoring point or a tension/compression rod.

29. A system of structural elements according to one of the claims 1 to 4, characterized in that one linking element is designed as a shackle cross clamp (150) and is equipped with a receiving lodging (44) directed transversely to the shackle-like extension (151) and with associated bolt holes (119), and that the shackle-like extension (151) is provided with a bore for connection to an anchoring point or a tension/compression rod.

30. A system of structural elements according to one of the claims 1 to 4, characterized in that one linking element is designed as an angle-setting clamp (155), consisting of two cooperating flange clamps (120), whose rear sides facing each other are provided with interengaging concentric serrations (156) and which can be clamped against each other by means of bolt connections passing through the central bores (157).

31. A system of structural elements according to one of the claims 1 to 4, characterized in that one linking element is designed as a socket clamp (160) and is shaped as an elongated cuboid, which is provided with one each coaxial dead end receiving lodging (44a) on both sides and comprises at least two bolt holes (162) configured between the dead end receiving lodgings, and that either two socket clamps (160) or two simple flange clamps (120) together with the socket clamp (160) serve for linking the supporting pipes.

19

## Revendications

1. Système modulaire pour constructions à ossature utilisant des tubes de support (1) en forme de colonnes à évidements en forme de goulottes s'étendant sur leur pourtour extérieur, parallèlement à l'axe, et des contre-profilés, s'engageant en liaison de forme, en forme d'une denture, dans ces évidements, sur les faces intérieures d'éléments de connexion (3) pouvant être raccordés, de manière amovible, aux tubes de support, le serpent des profilés d'appui des éléments de connexion (3) venant en prise, en forme de denture, avec le pourtour extérieur des tubes de support présentant un angle de prise de 60° à 120°, caractérisé en ce que les éléments de connexion sont pourvus d'au moins un autre profilé d'appui en forme de denture pour l'assemblage amovible, en liaison de forme, avec au moins un autre tube de support (1) qui se présente suivant un angle par rapport au premier tube de support cité.

2. Système modulaire de construction suivant la revendication 1, caractérisé en ce que les axes de chaque fois deux tubes de support assemblés, de manière amovible, en liaison de forme à l'aide d'un élément de connexion s'étendent dans un seul plan et se coupent.

3. Système modulaire de construction suivant la revendication 1, caractérisé en ce que les axes de chaque fois deux tubes de support assemblés, de manière amovible, en liaison de forme à l'aide d'un élément de connexion s'étendent dans deux plans parallèles l'un à l'autre et se croisent.

4. Système modulaire de construction suivant la revendication 1, caractérisé en ce que les axes de chaque fois deux tubes de support assemblés, de manière amovible, en liaison de forme à l'aide d'un élément de connexion s'étendent dans deux plans se présentant suivant un angle l'un par rapport à l'autre et se coupent.

5. Système modulaire de construction suivant les revendications 1 et 2, caractérisé en ce qu'un élément de connexion se présente sous forme d'un épaulement d'équerre (43) et est pourvu d'une pièce d'insertion (12) pouvant être introduite par un ajustage pressé aisé dans un premier tube de support (1), jusqu'au rebord cylindrique (10), ainsi que d'une auge de réception (44), s'étendant suivant un axe transversal venant en intersection avec un profilé d'appui en forme de denture pour venir en prise, en liaison de forme, avec un second tube de support (1).

6. Système modulaire de construction suivant la revendication 3, caractérisé en ce que l'auge de réception (44) est pourvue d'au moins deux alésages orientés vers l'axe du second tube de support à raccorder, réalisés de part et d'autre et servant au passage de vis de serrage (17), aboutissant dans des orifices d'introduction obliques (45).

7. Système modulaire de construction suivant la revendication 5, caractérisé en ce que l'auge de réception (44) se présente sous forme de plate-forme portante (50) en saillie des deux côtés par rapport à la pièce d'insertion (12).

8. Système modulaire de construction suivant les revendications 1 et 3, caractérisé en ce qu'un élément de connexion se présente sous forme de pièce portante en croix (63) et est pourvu de deux auges de réception (44), disposées suivant un angle de 90° l'une par rapport à l'autre, pour deux tubes de support (1) qui s'étendent dans deux plans parallèles et se croisent à une faible distance.

9. Système modulaire de construction suivant la revendication 8, caractérisé en ce que la bride de connexion (66) et l'auge de connexion (64) pour les tubes de support (1), qui sont pourvus du profilé d'appui en forme de denture, sont reliées par au moins une nervure de raidissement (65).

10. Système modulaire de construction suivant les revendications 8 et 9, caractérisé en ce que l'auge de connexion (64) présente une longueur plus grande que la bride de connexion (66).

11. Système modulaire de construction suivant la revendication 8, caractérisé en ce que chacune des deux auges de réception (44) de la bride de connexion (66) et de l'auge de connexion (64) est pourvue d'au moins deux alésages orientés vers l'axe du tube de support (1) à connecter correspondant, pour le passage de vis de serrage (17).

12. Système modulaire de construction suivant les revendications 1 et 2, caractérisé en ce qu'un élément de connexion se présente sous forme d'épaulement d'équerre tronqué (67) et est pourvu de deux raccords (68, 69), disposés à angle droit l'un par rapport à l'autre et s'étendant dans un seul plan, avec des auges de réception (44) pour chaque fois deux tubes de support (1).

13. Système modulaire de construction suivant la revendication 12, caractérisé en ce que les raccords (68, 69) s'appuient l'un contre l'autre par au moins une nervure moulée (70).

14. Système modulaire de construction suivant la revendication 12, caractérisé en ce que chaque raccord est pourvu d'au moins deux alésages, orientés vers l'axe du tube de support (1) à connecter, pour le passage de vis de serrage (17).

15. Système modulaire de construction suivant l'une des revendications 1 à 3, caractérisé en ce qu'un élément de connexion se présente sous forme de pièce de bridage en croix (75) et est pourvu d'une auge entourante (76) à profilé d'appui (44) en forme de denture pour un tube de support (1) ainsi que de deux brides latérales (78), à alésages pour vis (80), aboutant au manchon à bride (78) contenant le profilé d'appui (44), auxquelles aboute, de part et d'autre et suivant un angle, chaque fois une pièce de pression profilée (82), avec un autre profilé d'appui (44), qui, en coopération avec une seconde pièce de bridage en croix (75), pivotée de 90°, recevant un second tube de support (1), se presse, à l'état vissé, dans l'auge de réception de cette dernière.

16. Système modulaire de construction suivant l'une des revendications 1 à 3, caractérisé en ce qu'un élément de connexion se présente sous forme de pièce d'assemblage en croix (77) et est pourvu d'une auge entourante (76) à profilé d'appui (44) pour un tube de support (1) ainsi que d'orifices d'introduction (45), prévus de part et d'autre, à alésages à vis (80) s'étendant à angle droit par rapport aux faces de bride (86) et aboutissant dans celles-ci et que les faces de bride (86) de part et d'autre sont pourvues de deux pièces de pression profilées (82) saillantes, disposées entre les alésages à vis (80), à profilés d'appui (44) qui, en coopération avec une seconde pièce d'assemblage en croix (77), pivotée de 90°, recevant un second tube de support (1), se pressent, à l'état vissé, dans l'auge de réception (44) de cette dernière.

17. Système modulaire de construction suivant l'une des revendications 1 à 4, caractérisé en ce qu'un élément de connexion se présente sous forme de pièce de serrage (120) et est pourvu d'une auge de réception (44) à profilé d'appui en forme de denture pour un tube de support (1) ainsi que, de part et d'autre, de bosses (118) pour alésages à vis (119).

18. Système modulaire de construction suivant l'une des revendications 1 à 4, caractérisé en ce qu'un élément de connexion se présente sous forme de pièce de serrage en croix (115) et présente une forme environ parallélipipédique qui est pourvue, sur deux côtés opposés, de chaque fois une auge de réception (44) pour un tuyau de support (1), dont les axes se trouvent dans deux plans s'étendant parallèlement et à une distance l'un de l'autre et formant un angle entre elles et que de part et d'autre de chaque auge de réception (44) sont prévues, de deux en deux, des bosses (118) pour alésages à vis (119).

19. Système modulaire de construction suivant l'une des revendications 1 à 4, caractérisé en ce qu'un élément de connexion se présente sous forme de pièce de serrage d'équerre (110) et se compose de deux parties parallélipipédiques, formant un angle droit entre elles, s'emboîtant l'une dans l'autre pour former une seule pièce, chacune d'elles présentant une auge de réception (44) dont les axes se coupent, l'une des auges de réception aboutant suivant un angle obtus à la partie parallélipipédique de l'autre auge de réception, et que de part et d'autre de chaque auge de réception (44) sont prévues, de deux en deux, des bosses (118) pour alésages à vis (119).

20. Système modulaire de construction suivant l'une des revendications 1 à 4, caractérisé en ce qu'un élément de connexion se présente sous forme de pièce de serrage à décrochage d'équerre (105) et se compose de deux parties parallélipipédiques, formant un angle droit entre elles, s'emboîtant l'une dans l'autre pour former une seule pièce, chacune d'elles présentant une auge de réception (44) dont les axes se coupent, les faces frontales libres des deux auges de réception (44) se coupant, en venant en butée l'une contre l'autre, suivant une droite qui s'étend perpendiculairement au plan des axes des auges de réception (44), et que des alésages à vis sont prévues, de deux en deux, dans des bosses ou évidements (106).

21. Système modulaire de construction suivant l'une des revendications 1 à 4, caractérisé en ce qu'un élément de connexion se présente sous forme de pièce de serrage à branche d'équerre (100) et est formé de deux parties de branche formant un angle entre elles et assemblées l'une à l'autre pour former une seule pièce, dont chacune présente une auge de réception (44), dont les axes se coupent, les parties de branche étant raidies l'une contre l'autre par au moins une nervure moulée et, de part et d'autre des auges de réception (44), étant formées, de deux en deux, des bosses (118) pour alésages à vis (119).

22. Système modulaire de construction suivant l'une des revendications 1 à 4, caractérisé en ce qu'un élément de connexion se présente sous forme de longue pièce de bridage en croix (123) et est formé en forme d'une pièce parallélipipédique qui présente deux auges de réception (44) situées, avec leurs axes, dans un seul plan et disposées suivant un angle droit (ou oblique) l'une par rapport à l'autre et qui est pourvu, par ailleurs, des alésages à vis correspondant aux auges de réception (44).

23. Système modulaire de construction suivant l'une des revendications 1 à 4, caractérisé en ce qu'un élément de connexion se présente sous forme de pièce de serrage à bride (130) et est pourvru d'une auge de réception (44), dont l'axe s'étend suivant un angle droit (ou oblique) par rapport à sa face de bride plane, par laquelle il peut être raccordé, par des vissages à travers des alésages à vis (119), à une contre-face plane.

24. Système modulaire de construction suivant l'une des revendications 1 à 4, caractérisé en ce qu'un élément de connexion se présente sous forme de pièce de serrage en croix triple (165) et est pourvu de trois auges de réception (44) dont deux se trouvent, en se coupant, dans un seul plan et l'une d'elles s'étendant en forme d'auge de réception en sac (44a) suivant un angle obtus par rapport à l'autre, tandis que la troisième auge de réception (44b) s'étend de manière à couper les axes des deux autres auges de réception dans un plan parallèle au plan des deux autres auges de réception et que les trois auges de réception (44, 44a, 44b) sont pourvues d'alésages à vis (119) disposées de deux en deux.

25. Système modulaire de construction suivant l'une des revendications 1 à 4, caractérisé en ce qu'un élément de connexion se présente sous forme de pièce de serrage à plaque de connexion (135) et est pourvu d'une auge de réception (44) dont l'axe s'étend parallèlement au plan de fixation de sa plaque de connexion (136), et que l'auge de réception (44) et la plaque de connexion (136) sont pourvues d'alésages à vis (119 où 127).

26. Système modulaire de construction suivant l'une des revendications 1 à 4, caractérisé en ce qu'un élément de connexion se présente sous forme de pièce de serrage à socle (125) et est pourvu d'une auge de réception en sac (44a) qui est orientée perpendiculairement (ou suivant un angle oblique par rapport) à sa plaque de socle plane (129) et que l'auge de réception (44a) et la plaque de socle (129) sont pourvues d'alésages à vis (119 ou 127).

27. Système modulaire de construction suivant l'une des revendications 1 à 4, caractérisé en ce qu'un élément de connexion se présente sous forme de pièce de serrage à emboîtement (140) et est pourvu d'une auge de réception (44) dont l'axe s'étend à angle droit (ou suivant un angle oblique) par rapport à sa pièce d'insertion (12) pour l'introduction dans un tube de support (1) et qui est pourvu de deux bosses (118) opposées à trous à vis (119).

28. Système modulaire de construction suivant l'une des revendications 1 à 4, caractérisé en ce qu'un élément de connexion se présente sous forme de pièce de serrage à languette (145) et est pourvu d'une auge de réception en sac (44a) dont l'axe est orienté vers le prolongement en forme de languette (144) qui est pourvue d'un alésage (143) pour la connexion à un point fixe ou à une barre de traction/poussée.

29. Système modulaire de construction suivant l'une des revendications 1 à 4, caractérisé en ce qu'un élément de connexion se présente sous forme de pièce de serrage transversale à languette (150) et est pourvu d'une auge de réception (44) orientée transversalement au prolongement en forme de languette (151) et des alésages à vis (119) associés et que le prolongement en forme de languette (151) est pourvu d'un alésage pour la connexion à un point fixe ou à une barre de traction/poussée.

30. Système modulaire de construction suivant l'une des revendications 1 à 4, caractérisé en ce qu'un élément de connexion se présente sous forme de pièce de serrage à déplacement angulaire (155) qui se compose de deux pièces de serrage (120) coopérantes dont les faces arrière orientées l'une vers l'autre sont pourvues de dentures concentriques (156) engrenant l'une dans l'autre et qui peuvent être serrées l'une par rapport à l'autre à l'aide d'une vis traversant les alésages centraux (157).

31. Système modulaire de construction suivant l'une des revendications 1 à 4, caractérisé en ce qu'un élément de connexion se présente sous forme de pièce de serrage à manchon (160) et est formé sous forme d'un parallélilipède rectangle allongé qui est pourvu, aux deux extrémités, de chaque fois une auge de réception en sac (44a) orientée suivant le même axe et présente au moins deux alésages à vis (162) disposés entre ces dernières, et que, pour la connexion des tubes de support servent soit deux pièces de serrage à manchon (160), soit deux pièces de serrage simples (120) conjointement avec la pièce de serrage à manchon (160).

Fig.2

Fig.4

Fig.3

Fig.7

Fig.1

Fig.5

Fig.6

23

Fig.9
Fig.10
Fig. 8
Fig.12
Fig.13
Fig.14
Fig. 11

Fig.17

Fig.16

Fig.15

Fig.18

Fig.19

Fig.20

Fig. 25

Fig. 21

Fig. 22

Fig. 23

Fig. 24

Fig. 26

Fig. 26 a

Fig. 27

Fig. 26 b

Fig. 28 a

Fig. 28 b

Fig. 29

Fig. 30

Fig. 31

Fig. 43

Fig. 33

Fig. 32

Fig. 34

Fig. 37

Fig. 36

Fig. 40

Fig. 38

Fig. 35

Fig. 39

Fig. 42a

Fig. 42b

Fig. 41